(19) Europäisches Patentamt
European Patent Office
Office européen des brevets

(11) **EP 4 484 391 A1**

(12) **EUROPEAN PATENT APPLICATION**
published in accordance with Art. 153(4) EPC

(43) Date of publication:
**01.01.2025 Bulletin 2025/01**

(21) Application number: **23759790.1**

(22) Date of filing: **14.02.2023**

(51) International Patent Classification (IPC):
***C03C 3/091*** (2006.01)    ***C03B 25/00*** (2006.01)

(52) Cooperative Patent Classification (CPC):
**C03B 25/00; C03C 3/091**

(86) International application number:
**PCT/JP2023/005070**

(87) International publication number:
**WO 2023/162788 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022 JP 2022027168**

(71) Applicant: **AGC INC.**
**Chiyoda-ku,**
**Tokyo 1008405 (JP)**

(72) Inventors:
• **HAMADA, Yuya**
**Tokyo 100-8405 (JP)**
• **TOKUNAGA, Hirofumi**
**Tokyo 100-8405 (JP)**

(74) Representative: **Müller-Boré & Partner**
**Patentanwälte PartG mbB**
**Friedenheimer Brücke 21**
**80639 München (DE)**

(54) **ALKALI-FREE GLASS AND GLASS SHEET**

(57)    A purpose of the present invention is to provide an alkali-free glass which has a low dielectric loss tangent in a high-frequency region and is excellent in terms of acid resistance, moisture resistance, and phase separation property. The present invention relates to an alkali-free glass comprising, in terms of oxide amount in mol%, 50-76 $SiO_2$, 2-6 $Al_2O_3$, 18-35 $B_2O_3$, 1-6 MgO, 0.5-5 CaO, 1-5 SrO, and 0-3 BaO and having a value of expression (A) of 3.5-6, a value of expression (B) of -2 to 2, a value of expression (J) of 0.2-0.7, and a value of $\Delta\beta$-OH of 0 $mm^{-1}$ to 0.1 $mm^{-1}$.

**EP 4 484 391 A1**

## Description

### TECHNICAL FIELD

The present invention relates to an alkali-free glass. The present invention also relates to a glass sheet, a glass substrate for a high frequency device, a panel antenna, a window glass, a vehicular window glass, and a cover glass for a touch panel containing such an alkali-free glass.

### BACKGROUND ART

There are electronic devices such as communication devices such as a mobile phone, a smartphone, a portable information terminal, and a Wi-Fi device, a surface acoustic wave (SAW) device, a radar component, and an antenna component. In such electronic devices, in order to increase a communication capacity, increase a communication speed, and the like, a high frequency of a signal frequency is advanced. An insulating substrate such as a resin substrate, a ceramic substrate, or a glass substrate is generally used as a circuit substrate for use in an electronic device for a high frequency application An insulating substrate for use in a high frequency device is required to reduce a transmission loss based on a dielectric loss, a conductor loss, and the like in order to ensure properties such as a quality and intensity of a high frequency signal.

Among these insulating substrates, the resin substrate has low rigidity due to properties thereof. Therefore, in the case where the rigidity (strength) is required for a semiconductor package product, it is difficult to apply the resin substrate. It is difficult to improve smoothness of a surface of the ceramic substrate, and accordingly, there is a disadvantage that the conductor loss caused by a conductor formed on the substrate surface tends to increase On the other hand, since the glass substrate has high rigidity, it is easy to reduce a size and a thickness of the package, it is excellent in surface smoothness, and it is easy to increase the size of the substrate itself.

Patent Literature 1 discloses a glass substrate for a high frequency device having a dielectric loss tangent of 0.007 or less at a frequency of 35 GHz.

### CITATION LIST

### PATENT LITERATURE

Patent Literature 1: WO 2018/051793

### SUMMARY OF INVENTION

### TECHNICAL PROBLEM

In recent years, in addition to reducing the dielectric loss tangent in a high frequency region, the glass substrate for the above application is required to have excellent acid resistance In a production process for a circuit substrate of a liquid crystal antenna, a high frequency device, or the like, chemical cleaning is performed as a pretreatment of forming a wiring layer on the glass substrate When chemical resistance of the glass is low, for example, a substrate surface may be dissolved during acid cleaning, and the smoothness of the substrate surface may be impaired, thereby decreasing the adhesion of a film formed on the substrate surface. In addition, an eluate may adhere to the substrate surface. Accordingly, the conductor loss due to the conductor formed on the substrate surface may increase

In addition, the glass substrate for the above application is required to have excellent moisture resistance When the moisture resistance is low, the substrate surface may deteriorate during storage, resulting in a loss of the smoothness of the substrate surface. Further, due to the excellent moisture resistance, it can withstand use under high humidity conditions.

In addition, the glass substrate for the above application is required to have an excellent phase separation property. When the glass has an excellent phase separation property, for example, when the glass substrate is subjected to acid cleaning, it is possible to suitably prevent local irregularities from being generated on the substrate surface. Accordingly, the transmission loss of the high frequency signal can be reduced.

An object of the present invention is to provide an alkali-free glass which has a low dielectric loss tangent in a high frequency region and has excellent acid resistance, moisture resistance, and phase separation property.

### SOLUTION TO PROBLEM

The inventors of the present invention have found that when a glass is made to have a specific composition range, in particular, a reduced proportion of three-coordinated boron in boron contained in the glass, the moisture resistance is improved while maintaining a good dielectric loss and acid resistance, and the above problems can be solved. Thus, the present invention has been completed.

[1] An alkali-free glass, including, as represented by mol% based on oxides:

50% to 76% of $SiO_2$;
2% to 6% of $Al_2O_3$;
18% to 35% of $B_2O_3$;
1% to 3.5% of MgO;
0.5% to 4% of CaO;
1% to 4.5% of SrO; and
0% to 3% of BaO, in which
an expression (A) is [MgO]+[CaO]+[SrO]+[BaO], and a value of the expression (A) is 3.5 to 6,
an expression (B) is [$Al_2O_3$]-([MgO]+[CaO]+[SrO]+[BaO]), and a value of the expression (B) is -2 to 2,
an expression (1) is ([MgO]+[CaO])/([MgO]+[CaO]+[SrO]+[BaO]), and a value of the expression (J) is 0.2 to 0.7, and
$\Delta\beta$-OP is 0 mm$^{-1}$ to 0.1 mm$^{-1}$, and the $\Delta\beta$-OP is calculated by the following method:

β-OH of a glass sheet made of an alkali-free glass and having a thickness of 1.0 mm is measured, then the glass sheet is left standing at a temperature of 60°C and a relative humidity of 95%, after 90 hours from a start of the standing, β-OH of the glass sheet is measured, and a value obtained by subtracting the β-OH before the standing from the β-OH after the standing is calculated as the $\Delta\beta$-OH.

[2] An alkali-free glass, including, as represented by mol% based on oxides:

50% to 67% of $SiO_2$;
2% to 6% of $Al_2O_3$;
18% to 35% of $B_2O_3$;
1% to 5.5% of MgO;
0% to 4.5% of CaO;
0.5% to 5% of SrO; and
0% to 3% of BaO, in which
an expression (A) is [MgO]+[CaO]+[SrO]+[BaO], and a value of the expression (A) is 3.5 to 6,
an expression (B) is [$Al_2O_3$]-([MgO]+[CaO]+[SrO]+[BaO]), and a value of the expression (B) is -2 to 2,
an expression (K) is [$SiO_2$]/([$SiO_2$]+[$B_2O_3$]), and a value of the expression (K) is 0.59 to 0.7,
an expression (L) is 119-(106×[$SiO_2$]+60×[$Al_2O_3$]+119×[$B_2O_3$]+37×[MgO]+32×[CaO]+32×[SrO]+33×[BaO]+36×[$Li_2O$]+20×[$Na_2O$]+13 ×[$K_2O$]), and a value of the expression (L) is 16 to 30, and
$\Delta\beta$-OP is 0 mm$^{-1}$ to 0.1 mm$^{-1}$, and the $\Delta\beta$-OP is calculated by the following method:

β-OH of a glass sheet made of an alkali-free glass and having a thickness of 1.0 mm is measured, then the glass sheet is left standing at a temperature of 60°C and a relative humidity of 95%, after 90 hours from a start of the standing, β-OH of the glass sheet is measured, and a value obtained by subtracting the β-OH before the standing from the β-OH after the standing is calculated as the $\Delta\beta$-OH.

[3] An alkali-free glass, including, as represented by mol% based on oxides:

50% to 68% of $SiO_2$;
2% to 6% of $Al_2O_3$;
26.5% to 35% of $B_2O_3$;
1% to 5% of MgO;
0% to 5% of CaO;
1% to 5% of SrO; and
0% to 3% of BaO, in which
an expression (A) is [MgO]+[CaO]+[SrO]+[BaO], and a value of the expression (A) is 2 to 6,
an expression (B) is [$Al_2O_3$]-([MgO]+[CaO]+[SrO]+[BaO]), and a value of the expression (B) is -3 to 2,
an amount of three-coordinated boron contained in the glass is 0% to 26% calculated as $B_2O_3$ as represented by mol% based on oxides, and

$\Delta\beta$-OP is 0 mm$^{-1}$ to 0.1 mm$^{-1}$, and the $\Delta\beta$-OP is calculated by the following method:

$\beta$-OH of a glass sheet made of an alkali-free glass and having a thickness of 1.0 mm is measured, then the glass sheet is left standing at a temperature of 60°C and a relative humidity of 95%, after 90 hours from a start of the standing, $\beta$-OH of the glass sheet is measured, and a value obtained by subtracting the $\beta$-OH before the standing from the $\beta$-OH after the standing is calculated as the $\Delta\beta$-OH.

[4] The alkali-free glass according to any one of [1] to [3], having an ultraviolet transmittance of 2% or more, the ultraviolet transmittance being measured under the following conditions:
a glass sheet having a thickness of 2.0 mm is heated to a temperature $T_4$ (°C) at which a glass viscosity is $10^4$ dPa·s, annealed to room temperature at a rate of 40°C/min, mirror-finished on both surfaces to have a thickness of 1.3 mm, and a parallel light transmittance of the obtained glass sheet at a wavelength of 308 nm is measured

[5] The alkali-free glass according to any one of [1] to [4], having a dielectric loss tangent at a frequency of 35 GHz of 0.005 or less.

[6] The alkali-free glass according to any one of [1] to [5], having a density of 2.58 g/cm$^3$ or less and an average thermal expansion coefficient at 50°C to 350°C of 20 $\times 10^{-7}$/°C to 50 $\times 10^{-7}$/°C.

[7] The alkali-free glass according to any one of [1] to [6], having a temperature $T_2$ at which a glass viscosity is $10^2$ dPa·s of 1500°C to 1900°C, and a temperature $T_4$ at which the glass viscosity is $10^4$ dPa·s of 1400°C or lower.

[8] The alkali-free glass according to any one of [1] to [7], which has a glass transition temperature of 700°C or lower.

[9] The alkali-free glass according to any one of [1] to [8], having a surface devitrification temperature of 1400°C or lower.

[10] A glass sheet containing:

the alkali-free glass according to any one of [1] to [9], in which
the glass sheet has main surfaces and an end surface, and
at least one of the main surfaces has an arithmetic mean roughness Ra of 1.5 nm or less.

[11] A glass sheet containing:

the alkali-free glass according to any one of [1] to [10], in which
the glass sheet has main surfaces and an end surface, has a length of at least one side of 1000 mm or more, and
has a thickness of 0.7 mm or less.

[12] A method for producing a glass sheet, the method including:
producing the alkali-free glass according to any one of [1] to [9] by a float method or a fusion method

[13] A method for producing a glass sheet including the alkali-free glass according to any one of [1] to [9], the method including:

heating a glass raw material to obtain a molten glass;
removing bubbles from the molten glass;
forming the molten glass into a sheet to obtain a glass ribbon; and
annealing the glass ribbon to room temperature, in which
the annealing is performed so that the glass ribbon is annealed at an equivalent cooling rate of 800°C/min or less.

[14] An alkali-free glass, containing, as represented by mol% based on oxides:

58% to 70% of SiO$_2$;
4.5% to 8% of Al$_2$O$_3$;
18% to 28% of B$_2$O$_3$;
0.5% to 5% of MgO;
0.1% to 3% of CaO;
0.1% to 3% of SrO; and
0% to 3% of BaO, in which
an expression (A) is [MgO]+[CaO]+[SrO]+[BaO], and a value of the expression (A) is 3.5 to 8,
an expression (B) is [Al$_2$O$_3$]-([MgO]+[CaO]+[SrO]+[BaO]), and a value of the expression (B) is 0 to 3,
an expression (C) is [SiO$_2$]+[B$_2$O$_3$], and a value of the expression (C) is 87 to 95,
an expression (E) is [MgO]/([MgO]+[CaO]+[SrO]+[BaO]), and a value of the expression (E) is 0.5 to 1, and
$\Delta\beta$-OP is 0 mm$^{-1}$ to 0.1 mm$^{-1}$, and the $\Delta\beta$-OP is calculated by the following method:

β-OH of a glass sheet made of an alkali-free glass and having a thickness of 1.0 mm is measured, then the glass sheet is left standing at a temperature of 60°C and a relative humidity of 95%, after 90 hours from a start of the standing, β-OH of the glass sheet is measured, and a value obtained by subtracting the β-OH before the standing from the β-OH after the standing is calculated as the Δβ-OH.

ADVANTAGEOUS EFFECTS OF INVENTION

An alkali-free glass according to the present invention has a low dielectric loss tangent in a high frequency region. Therefore, a dielectric loss of a high frequency signal can be reduced, and the alkali-free glass is suitable for a glass substrate for a high frequency device. According to a circuit substrate using such a glass substrate, it is possible to reduce a transmission loss of the high frequency signal and to provide a high frequency device such as a practical electronic device.

The alkali-free glass according to the present invention has excellent acid resistance. Therefore, when a glass substrate is subjected to acid cleaning in a production process for a circuit substrate of a liquid crystal antenna, a high frequency device, or the like, there is no chance that the substrate surface is dissolved and the smoothness of the substrate surface deteriorates, or an eluate adheres to the substrate surface. Therefore, a decrease in adhesion of a film formed on the substrate surface can be prevented. In addition, an increase in conductor loss can be prevented.

The alkali-free glass according to the present invention can reduce a transmission loss of radio waves in a high frequency band. Therefore, it is also suitable for a glass product that transmits and receives the radio waves in the high frequency band.

The alkali-free glass according to the present invention has excellent moisture resistance. Therefore, deterioration during storage can be prevented. In addition, a glass suitable for use under high temperature and high humidity conditions is obtained.

The alkali-free glass according to the present invention has an excellent phase separation property. Therefore, for example, when the glass substrate is subjected to the acid cleaning, it is possible to suitably prevent local irregularities from being generated on the substrate surface. Accordingly, the transmission loss of the high frequency signal can be reduced.

BRIEF DESCRIPTION OF DRAWINGS

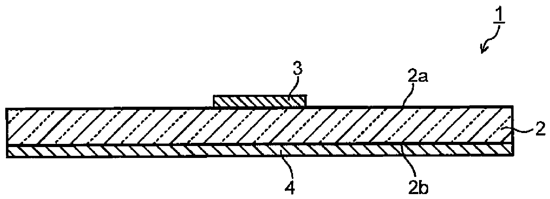

The FIGURE is a schematic cross-sectional view showing an example of a configuration of a circuit substrate for a high frequency device.

DESCRIPTION OF EMBODIMENTS

Hereinafter, an embodiment of the present invention will be described.

The present invention provides an alkali-free glass including, as represented by mol% based on oxides: 50 to 76 of $SiO_2$; 2 to 6 of $Al_2O_3$; 18 to 35 of $B_2O_3$; 1 to 3.5 of MgO; 0.5 to 4 of CaO; 1 to 4.5 of SrO; and 0 to 3 of BaO, in which a value of an expression (A) is 3.5 to 6, a value of an expression (B) is -2 to 2, a value of an expression (J) is 0.2 to 0.7, and Δβ-OH is 0 mm$^{-1}$ to 0.1 mm$^{-1}$ (hereinafter, referred to as a "glass according to a

first embodiment").

In addition, the present invention provides an alkali-free glass including, as represented by mol% based on oxides: 50 to 67 of $SiO_2$; 2 to 6 of $Al_2O_3$; 18 to 35 of $B_2O_3$; 1 to 5.5 of MgO; 0 to 4.5 of CaO; 0.5 to 5 of SrO; and 0 to 3 of BaO, in which a value of an expression (A) is 3.5 to 6, a value of an expression (B) is -2 to 2, a value of an expression (K) is 0.59 to 0.7, a value of an expression (L) is 16 to 30, and Δβ-OP is 0 mm$^{-1}$ to 0.1 mm$^{-1}$ (hereinafter, referred to as a "glass according to a second embodiment").

In addition, the present invention provides an alkali-free glass including, as represented by mol% based on oxides: 50 to 68 of $SiO_2$; 2 to 6 of $Al_2O_3$; 26.5 to 35 of $B_2O_3$; 1 to 5 of MgO; 0 to 5 of CaO; 1 to 5 of SrO; and 0 to 3 of BaO, in which a value of an expression (A) is 2 to 6, a value of an expression (B) is -3 to 2, an amount of three-coordinated boron contained in the glass is 0 to 26 calculated as $B_2O_3$, and Δβ-OH is 0 mm$^{-1}$ to 0.1 mm$^{-1}$ (hereinafter, referred to as a "glass according to a third embodiment").

In addition, the present invention provides an alkali-free glass including, as represented by mol% based on oxides: 58 to 70 of $SiO_2$; 4.5 to 8 of $Al_2O_3$; 18 to 28 of $B_2O_3$; 0.5 to 5 of MgO; 0.1 to 3 of CaO; 0.1 to 3 of SrO; and 0 to 3 of BaO, in which a value of an expression (A) is 3.5 to 8, a value of an expression (B) is 0 to 3, a value of an expression (C) is 87 to 95, a value of an expression (E) is 0.5 to 1, and Δβ-OP is 0 mm$^{-1}$ to 0.1 mm$^{-1}$ (hereinafter, referred to as a "glass according to a fourth embodiment").

In the present specification, the "glass according to the present invention" includes the glass according to the first embodiment, the glass according to the second embodiment, the glass according to the third embodiment, and the glass according to the fourth embodiment.

Note that, in the following description, the symbol "-" or the word "to" that is used to express a numerical range includes the numerical values before and after the symbol or the word as the upper limit and the lower limit of the range, respectively. Unless otherwise specified, a content of each component in an alkali-free glass or a glass sheet indicates a molar percentage (mol%) based on oxides. In addition, the [metal oxide] in the expression (A) to an expression (R) represents the mol% of the metal oxide component. For example, [MgO] represents mol% of magnesium oxide.

Note that, the "high frequency" in the present specification refers to a frequency of 10 GHz or more, preferably more than 30 GHz, and more preferably 35 GHz or more. The "high frequency" in the present specification refers to a frequency of 3 THz or less, preferably 1 THz or less, more preferably 300 GHz or less, and still more preferably 100 GHz or less.

Hereinafter, the glass according to the present invention (hereinafter, may be simply referred to as the "glass") will be described

The glass according to the first embodiment contains 50% to 76% of $SiO_2$. The glass according to the second embodiment contains 50% to 67% of $SiO_2$. The glass according to the third embodiment contains 50% to 68% of $SiO_2$. The glass according to the fourth embodiment contains 58% to 70% of $SiO_2$. $SiO_2$ is a network forming material, and when the content of $SiO_2$ is 50 mol% (hereinafter, simply referred to as %) or more, a dielectric loss tangent in a high frequency region can be reduced, glass formability and acid resistance can be improved, and an increase in surface devitrification temperature can be prevented. In the glasses according to the first to third embodiments, the content of $SiO_2$ is preferably 55% or more, more preferably 58% or more, still more preferably 60% or more, even more preferably 60.5% or more, and even still more preferably 61% or more.

In the glass according to the fourth embodiment, the content of $SiO_2$ is preferably 59% or more, more preferably 60% or more, still more preferably 61% or more, even more preferably 61.5% or more, and even still more preferably 62% or more.

In the glass according to the first embodiment, when the content of $SiO_2$ is 76% or less, meltability of the glass can be improved. In the glass according to the first embodiment, the content of $SiO_2$ is preferably 72% or less, more preferably 70% or less, still more preferably 69% or less, even more preferably 68% or less, even still more preferably 67% or less, yet still more preferably 66% or less, yet even more preferably 65% or less, yet even still more preferably 64% or less, yet even still more preferably 63.5% or less, yet even still more preferably 63% or less, yet even still more preferably 62.5% or less, and further yet even still more preferably 62% or less.

In the glass according to the second embodiment, when the content of $SiO_2$ is 67% or less, the meltability of the glass can be improved. In the glass according to the second embodiment, the content of $SiO_2$ is preferably 66% or less, more preferably 65% or less, still more preferably 64% or less, even more preferably 63.5% or less, even still more preferably 63% or less, yet still more preferably 62.5% or less, and yet even still more preferably 62% or less.

In the glass according to the third embodiment, when the content of $SiO_2$ is 68% or less, the meltability of the glass can be improved. In the glass according to the third embodiment, the content of $SiO_2$ is preferably 67% or less, more preferably 66% or less, still more preferably 65% or less, even more preferably 64.5% or less, even still more preferably 64% or less, yet still more preferably 63.5% or less, and yet even still more preferably 63% or less.

In the glass according to the fourth embodiment, when the content of $SiO_2$ is 70% or less, the meltability of the glass can be improved. In the glass according to the fourth embodiment, the content of $SiO_2$ is preferably 69% or less, preferably 68% or less, 67% or less, and 66% or less in order, more preferably 65% or less, still more preferably 64% or less, even more preferably 63.5% or less, even still more preferably 63% or less, yet still more preferably 62.5% or less, and yet even still more preferably 62% or less.

Each of the glasses according to the first to third embodiments contains 2% to 6% of $Al_2O_3$. The glass according to the fourth embodiment contains 4% to 8% of $Al_2O_3$. $Al_2O_3$ is a component that is effective in improving the acid resistance, improving a Young's modulus, improving a phase separation property of the glass, decreasing a thermal expansion coefficient of the glass, and the like.

In the glasses according to the first to third embodiments, when the content of $Al_2O_3$ is 2% or more, the acid resistance and the phase separation property of the glass are improved. In the glasses according to the first to third embodiments, the content of $Al_2O_3$ is preferably 3% or more, more preferably 3.5% or more, still more preferably 4% or more, even more preferably 4.2% or more, and even still more preferably 4.5% or more.

In the glass according to the fourth embodiment, when the content of $Al_2O_3$ is 4% or more, the acid resistance and the phase separation property of the glass are improved. In the glass according to the fourth embodiment, the content of $Al_2O_3$ is preferably 4.2% or more, more preferably 4.5% or more, still more preferably 4.8% or more, even more preferably 5% or more, and even still more preferably 5.2% or more.

In the glasses according to the first to third embodiments, when the content of $Al_2O_3$ is 6% or less, the dielectric loss tangent in the high frequency region can be reduced. The content of $Al_2O_3$ is preferably 5.8% or less, more preferably 5.6% or less, still more preferably 5.4% or less, even more preferably 5.2% or less, and even still more preferably 5% or less.

In the glass according to the fourth embodiment, when the content of $Al_2O_3$ is 8% or less, the dielectric loss tangent in the high frequency region can be reduced. In the glass according to the fourth embodiment, the content of $Al_2O_3$ is preferably 7.5% or less, more preferably 7% or less, still more preferably 6.5% or less, even more preferably 6% or less, and even still more preferably 5% or less.

Each of the glasses according to the first and second embodiments contains 18% to 35% of $B_2O_3$. The glass according to the third embodiment contains 26.5% to 35% of $B_2O_3$. The glass according to the fourth embodiment contains 18% to 28% of $B_2O_3$.

In the glasses according to the first and second embodiments, when the content of $B_2O_3$ is 18% or more, the meltability is improved. In addition, the dielectric loss tangent in the high frequency region can be reduced. In the glasses according to the first and second embodiments, the content of $B_2O_3$ is preferably 20% or more, more preferably 22% or more, still more preferably 23% or more, even more preferably 24% or more, even still more preferably 25% or more, yet still more preferably 26% or more, yet even more preferably 26.5% or more, yet even still more preferably 27% or more, yet even still more preferably 27.2% or more, and further yet even still more preferably 27.5% or more.

In the glass according to the third embodiment, when the content of $B_2O_3$ is 26.5% or more, the meltability is improved. In addition, the dielectric loss tangent in the high frequency region can be reduced. In the glass according to the third embodiment, the content of $B_2O_3$ is preferably 26.6% or more, more preferably 26.8% or more, and particularly preferably 27% or more.

In the glass according to the fourth embodiment, when the content of $B_2O_3$ is 18% or more, the meltability is improved. In addition, the dielectric loss tangent in the high frequency region can be reduced. In the glass according to the fourth embodiment, the content of $B_2O_3$ is preferably 20% or more, more preferably 21% or more, still more preferably 22% or more, even more preferably 23% or more, and even still more preferably 24% or more.

In the glasses according to the first to third embodiments, when the content of $B_2O_3$ is 35% or less, the acid resistance can be improved. The content of $B_2O_3$ is preferably 33% or less, more preferably 31% or less, still more preferably 30% or less, even more preferably 29.5% or less, even still more preferably 29% or less, and yet still more preferably 28.5% or less.

In the glass according to the fourth embodiment, when the content of $B_2O_3$ is 28% or less, the acid resistance can be improved. The content of $B_2O_3$ is preferably 27.5% or less, more preferably 27.2% or less, still more preferably 27% or less, even more preferably 26.8% or less, even still more preferably 26.5% or less, and yet still more preferably 26% or less.

In the present glass, boron ions can have an oxygen coordination number of three or four. In a general boron-containing alkali-free glass, the oxygen coordination number of boron is mainly three. Four-coordinated boron (hereinafter may be referred to as B[4]) enters a glass skeleton and forms a tetrahedral structure, making it less susceptible to a reaction with water and improving the moisture resistance. On the other hand, three-coordinated boron (hereinafter may be referred to as B[3]) decreases the moisture resistance of the glass. In the glass according to the present invention, a ratio of an amount of three-coordinated boron to a total amount of three-coordinated boron and four-coordinated boron contained in the glass is preferably 0.5 to 0.98. When the ratio of the amount of three-coordinated boron to the total amount of three-coordinated boron and four-coordinated boron is 0.5 or more, the acid resistance can be improved. The ratio of the amount of three-coordinated boron to the total amount of three-coordinated boron and four-coordinated boron is more preferably 0.7 or more, still more preferably 0.8 or more, even more preferably 0.9 or more, even still more preferably 0.92 or more, and yet still more preferably 0.94 or more. In addition, when the ratio of the amount of three-coordinated boron to the total amount of three-coordinated boron and four-coordinated boron is 0.98 or less, the moisture resistance can be improved while maintaining good dielectric properties. The ratio is preferably 0.97 or less, more preferably 0.965 or less, still more preferably 0.96 or less, even more preferably 0.955 or less, and even still more preferably 0.95 or less.

Further, in the glass according to the third embodiment, the content of three-coordinated boron contained in the glass is 26% or less calculated as $B_2O_3$, from the viewpoint of improving the moisture resistance In the glass according to the third embodiment, the content of three-coordinated boron is preferably 25.8% or less, more preferably 25.6% or less, still more preferably 25.4% or less, and even more preferably 25.2% or less. In the glass according to the third embodiment, the content of three-coordinated boron is 0% or more calculated as $B_2O_3$, from the viewpoint of improving the acid resistance In the glass according to the third embodiment, the content of three-coordinated boron is more preferably 5% or more, still more preferably 10% or more, even more preferably 15% or more, even still more preferably 20% or more, and yet still more preferably 22% or more.

The ratio of the amounts of three-coordinated boron and four-coordinated boron is measured by using $^{11}$B-NMR. Examples of a method of adjusting the proportion of three-coordinated boron to the total amount of three-coordinated boron and four-coordinated boron include a method of adjusting a composition and a cooling condition. Specifically, examples of the method of adjusting a composition include a method of adjusting the expression (L), which is a parameter representing a scale of a basicity of an oxide, to be preferably 16 to 30, a method of adjusting the expression (J), which is a ratio of an alkaline earth metal, to be 0.2 to 0.7, and a method of adjusting an expression (M), which is a parameter representing cationic strength, to 1.5 to 2.5 In addition, examples of the method of adjusting a cooling condition include setting an equivalent cooling rate in an annealing step in the production of the glass to be preferably 800°C/min or less.

In the glass according to the present invention, MgO is a component that increases the Young's modulus without increasing a specific gravity. That is, MgO is a component that increases a specific elastic modulus, which can reduce a deflection problem, increase a fracture toughness value, and improve the strength of the glass. In addition, MgO is also a component that improves the meltability.

The glass according to the first embodiment contains 1% to 3.5% of MgO. The glass according to the second embodiment contains 1% to 5.5% of MgO. The glass according to the third embodiment contains 1% to 5% of MgO. The glass according to the fourth embodiment contains 0.5% to 5% of MgO.

In the glasses according to the first to third embodiments, when the content of MgO is 1% or more, the effects of containing MgO are obtained. In the glasses according to the first to third embodiments, the content of MgO is preferably 1.2% or more, more preferably 1.4% or more, still more preferably 1.6% or more, even more preferably 1.8% or more, and particularly preferably 2% or more.

In the glass according to the fourth embodiment, when the content of MgO is 0.5% or more, the effects of containing MgO are obtained. In the glass according to the fourth embodiment, the content of MgO is preferably 1% or more, more preferably 1.2% or more, still more preferably 1.5% or more, even more preferably 1.7% or more, and particularly preferably 2% or more.

In the glass according to the first embodiment, when the content of MgO is 3.5% or less, the increase in surface devitrification temperature and deterioration of the moisture resistance are easily prevented. Therefore, the content of MgO is 3.5% or less, preferably 3.2% or less, more preferably 3% or more, still more preferably 2.8% or more, and even more preferably 2.5% or more.

In the glass according to the second embodiment, when the content of MgO is 5.5% or less, the increase in surface devitrification temperature and the deterioration of the moisture resistance are easily prevented. Therefore, the content of MgO is preferably 5% or less, more preferably 4% or less, still more preferably 3.5% or less, and even more preferably 3% or less.

In the glasses according to the third and fourth embodiments, when the content of MgO is 5% or less, the increase in surface devitrification temperature and the deterioration of the moisture resistance are easily prevented. Therefore, the content of MgO is preferably 4.5% or less, more preferably 4% or less, still more preferably 3.5% or less, and even more preferably 3% or less.

In the glass according to the present invention, CaO is a component that has a property of increasing the specific elastic modulus next to MgO among alkaline earth metals and not excessively decreasing a strain point, and that improves the meltability similarly to MgO. Further, CaO is also a component having a property that it is less likely to deteriorate the moisture resistance and is less likely to increase the surface devitrification temperature than MgO.

The glass according to the first embodiment contains 0.5% to 4% of CaO. The glass according to the second embodiment contains 0% to 4.5% of CaO. The glass according to the third embodiment preferably contains 0% to 5% of CaO. The glass according to the fourth embodiment contains 0.1% to 3% of CaO.

In the glass according to the first embodiment, when the content of CaO is 4% or less, an average thermal expansion coefficient is not excessively increased, and the increase in surface devitrification temperature can be prevented. In the glass according to the first embodiment, the content of CaO is preferably 3.8% or less, more preferably 3.5% or less, still more preferably 3.2% or less, even more preferably 3% or less, even still more preferably 2.8% or less, yet still more preferably 2.5% or less, yet even more preferably 2.2% or less, and yet even still more preferably 2% or less.

In the glass according to the second embodiment, when the content of CaO is 4.5% or less, the average thermal expansion coefficient is not excessively increased, and the increase in surface devitrification temperature can be prevented. In the glass according to the second embodiment, the content of CaO is preferably 4% or less, more preferably 3.5% or less, still more preferably 3.2% or less, even more preferably 3% or less, even still more preferably 2.8% or less, yet still more preferably 2.5% or less, yet even more preferably 2.2% or less, and yet even still more preferably 2% or less.

In the glass according to the third embodiment, when the content of CaO is 5% or less, the average thermal expansion coefficient is not excessively increased, and the increase in surface devitrification temperature can be prevented. In the glass according to the third embodiment, the content of CaO is preferably 4.5% or less, more preferably 4% or less, still more preferably 3.5% or less, even more preferably 3% or less, even still more preferably 2.8% or less, yet still more preferably 2.5% or less, yet even more preferably 2.2% or less, and yet even still more preferably 2% or less.

In the glass according to the fourth embodiment, when the content of CaO is 3% or less, the average thermal expansion coefficient is not excessively increased, and the increase in surface devitrification temperature can be prevented. In the glass according to the fourth embodiment, the content of CaO is preferably 2.8% or less, more preferably 2.5% or less, still more preferably 2.2% or less, and even more preferably 2% or less.

In the glass according to the first embodiment, when the content of CaO is 0.5% or more, the above effects can be sufficiently obtained Therefore, the content of CaO is 0.5% or more, preferably 0.6% or more, more preferably 0.7% or more, still more preferably 0.8% or more, even more preferably 0.9% or more, and even still more preferably 1% or more.

In the glasses according to the second and third embodiments, in the case where CaO is contained, the content thereof is preferably 0.1% or more, more preferably 0.2% or more, still more preferably 0.5% or more, even more preferably 0.6% or more, even still more preferably 0.7% or more, yet still more preferably 0.8% or more, yet even more preferably 0.9% or more, and yet even still more preferably 1% or more.

In the glass according to the fourth embodiment, when the content of CaO is 0.1% or more, the above effects can be sufficiently obtained Therefore, the content of CaO is 0.1% or more, preferably 0.2% or more, more preferably 0.5% or more, still more preferably 0.6% or more, even more preferably 0.7% or more, even still more preferably 0.8% or more, yet still more preferably 0.9% or more, yet even more preferably 1% or more, and yet even still more preferably 1.5% or more.

The glass according to the first embodiment contains 1% to 4.5% of SrO. The glass according to the second embodiment contains 0.5% to 5% of SrO. The glass according to the third embodiment contains 1% to 5% of SrO. The glass according to the fourth embodiment contains 0.1% to 3% of SrO. SrO is a component that improves the moisture resistance of the glass, that does not increase the surface devitrification temperature of the glass, and that improves the meltability of the glass.

In the glasses according to the first and third embodiments, when the content of SrO is 1% or more, the above effects are easily obtained In the glasses according to the first and third embodiments, the content of SrO is preferably 1.2% or more, and more preferably 1.5% or more.

In the glass according to the second embodiment, when the content of SrO is 0.5% or more, the above effects are easily obtained The content of SrO is preferably 0.6% or more, more preferably 0.7% or more, still more preferably 0.8% or more, even more preferably 1.2% or more, and even still more preferably 1.5% or more.

In the glass according to the fourth embodiment, when the content of SrO is 0.1% or more, the above effects are easily obtained The content of SrO is preferably 0.2% or more, more preferably 0.5% or more, still more preferably 0.6% or more, even more preferably 0.7% or more, even still more preferably 0.8% or more, yet still more preferably 0.9% or more, yet even more preferably 1% or more, and yet even still more preferably 1.5% or more.

In the glass according to the first embodiment, when the content of SrO is 4.5% or less, the average thermal expansion coefficient can be prevented from being excessively increased without excessively deteriorating the acid resistance and excessively increasing the specific gravity. In the glass according to the present invention, the content of SrO is preferably 4.3% or less, more preferably 4% or less, still more preferably 3.5% or less, even more preferably 3% or less, even still more preferably 2.5% or less, and particularly preferably 2% or less.

In the glasses according to the second and third embodiments, when the content of SrO is 5% or less, the average thermal expansion coefficient can be prevented from being excessively increased without excessively deteriorating the acid resistance and excessively increasing the specific gravity. In the glasses according to the second and third embodiments, the content of SrO is preferably 4.5% or less, more preferably 4% or less, still more preferably 3.5% or less, even more preferably 3% or less, even still more preferably 2.5% or less, and particularly preferably 2% or less.

In the glass according to the fourth embodiment, when the content of SrO is 3% or less, the average thermal expansion coefficient can be prevented from being excessively increased without excessively deteriorating the acid resistance and excessively increasing the specific gravity. In the glass according to the fourth embodiment, the content of SrO is preferably 2.8% or less, more preferably 2.5% or less, still more preferably 2.3% or less, even more preferably 2.2% or less, even still more preferably 2.1% or less, and particularly preferably 2% or less.

In the glass according to the present invention, BaO is a component that improves the moisture resistance of the glass, that does not increase the surface devitrification temperature of the glass, and that improves the meltability of the glass. Therefore, the glass according to the present invention contains 0% to 3% of BaO. In the case where BaO is contained, the content of BaO is preferably 0.1% or more, and more preferably 0.2% or more. When the content of BaO is large, the specific gravity tends to increase, the Young's modulus tends to decrease, and the average thermal expansion coefficient tends to excessively increase. In addition, the acid resistance of the glass decreases. Therefore, the content of BaO is 3% or less, preferably 2% or less, more preferably 1% or less, still more preferably 0.8% or less, even more preferably 0.6% or less, and even still more preferably 0.4% or less.

In the glasses according to the first and second embodiments, when the expression (A) is a total content represented by [MgO]+[CaO]+[SrO]+[BaO], the value of the expression (A) is 3.5 to 6. In the glass according to the third embodiment, the value of the expression (A) is 2 to 6. In the glass according to the fourth embodiment, the value of the expression (A) is 3.5 to 8.

In the glasses according to the first, second, and fourth embodiments, when the value of the expression (A) is 3.5 or more, the increase in surface devitrification temperature can be prevented. Accordingly, the glass quality is improved, and the productivity in producing a glass sheet is improved.

In the glasses according to the first, second, and fourth embodiments, the value of the expression (A) is preferably 3.8 or more, more preferably 4 or more, still more preferably 4.2 or more, even more preferably 4.4 or more, even still more preferably 4.6 or more, yet still more preferably 4.8 or more, and yet even more preferably 5 or more.

In the glass according to the third embodiment, when the value of the expression (A) is 2 or more, the increase in surface devitrification temperature can be prevented. Accordingly, the glass quality is improved, and the productivity in producing a glass sheet is improved.

In the glass according to the third embodiment, the value of the expression (A) is preferably 3 or more, more preferably 4 or more, still more preferably 4.2 or more, even more preferably 4.4 or more, even still more preferably 4.6 or more, yet still more preferably 4.8 or more, and yet even more preferably 5 or more.

In the glasses according to the first to third embodiments, when the value of the expression (A) is 6% or less, the dielectric loss tangent in the high frequency region can be reduced, and the acid resistance and the phase separation property of the glass are improved. In the glasses according to the first to third embodiments, the value of the expression (A) is preferably 5.7% or less, more preferably 5.5% or less, and still more preferably 5.2% or less.

In the glass according to the fourth embodiment, the value of the expression (A) is 8% or less, the dielectric loss tangent in the high frequency region can be reduced, and the acid resistance and the phase separation property of the glass are improved.

In the glass according to the fourth embodiment, the value of the expression (A) is preferably 7.5 or less, more preferably 7 or less, still more preferably 6.5 or less, and even more preferably 6% or less.

In the glasses according to the first and second embodiments, when the expression (B) is an amount represented by $[Al_2O_3]-([MgO]+[CaO]+[SrO]+[BaO])$, the value of the expression (B) is -2 to 2. In the glass according to the third embodiment, the value of the expression (B) is -3 to 2. In the glass according to the fourth embodiment, the value of the expression (B) is 0 to 3.

In the glass according to the first embodiment and the glass according to the second embodiment, when the value of the expression (B) is -2 or more, the acid resistance and the phase separation property of the glass are improved.

In the glass according to the first embodiment and the glass according to the second embodiment, the value of the expression (B) is preferably -1.5 or more, more preferably -1.2 or more, still more preferably -1 or more, even more preferably -0.7 or more, and even still more preferably -0.5 or more.

In the glass according to the third embodiment, when the value of the expression (B) is -3 or more, the acid resistance and the phase separation property of the glass are improved.

In the glass according to the third embodiment, the value of the expression (B) is preferably -2 or more, more preferably -1.5 or more, still more preferably -1.2 or more, even more preferably -1 or more, even still more preferably -0.7 or more, and particularly preferably -0.5 or more.

In the glass according to the fourth embodiment, when the value of the expression (B) is 0 or more, the acid resistance and the phase separation property of the glass are improved.

In the glass according to the fourth embodiment, the value of the expression (B) is preferably 0.1 or more, more preferably 0.2 or more, still more preferably 0.4 or more, even more preferably 0.6 or more, even still more preferably 0.8 or more, and particularly preferably 1 or more.

In the glasses according to the first to third embodiments, when the value of the expression (B) is 2 or less, the increase in surface devitrification temperature can be prevented. Accordingly, the glass quality is improved, and the productivity in producing a glass sheet is improved. In the glasses according to the first to third embodiments, the value of the expression (B) is preferably 1.5 or less, more preferably 1 or less, still more preferably 0.5 or less, and even more preferably 0.2% or less. On the other hand, in the glass according to the present invention, in the case where it is desired to further reduce the dielectric loss tangent in the high frequency region, specifically, in the case where it is desired to reduce the dielectric loss tangent ($\tan \delta$) at a frequency of 35 GHz of the glass according to the present invention to 0.002 or less, the value of the expression (B) is preferably 0 or less, more preferably -0.1 or less, still more preferably -0.2 or less, even more preferably -0.3 or less, even still more preferably -0.4 or less, yet still more preferably -0.5 or less, yet even more preferably -0.6 or less, yet even still more preferably -0.8 or less, and further yet even still more preferably -1 or less.

In the glass according to the fourth embodiment, when the value of the expression (B) is 3 or less, the increase in surface devitrification temperature can be prevented. Accordingly, the glass quality is improved, and the productivity in producing a glass sheet is improved. In the glass according to the fourth embodiment, the value of the expression (B) is preferably 2.5 or less, 2.2 or less, and 2 or less in order, more preferably 1.8 or less, still more preferably 1.5 or less, and even more preferably 1.2% or less. On the other hand, in the glass according to the fourth embodiment, in the case where it is desired to further reduce the dielectric loss tangent in the high frequency region, specifically, in the case where it is desired to reduce the dielectric loss tangent ($\tan \delta$) at a frequency of 35 GHz of the glass according to the present invention to 0.002 or less, the value of the expression (B) is preferably 1 or less, more preferably 0.9 or less, still more preferably 0.8 or less, even more preferably 0.7 or less, even still more preferably 0.6 or less, and yet still more preferably 0.5 or less.

In the glasses according to the first to third embodiments, when the expression (C) is a total content represented by $[SiO_2]+[B_2O_3]$, the value of the expression (C) is preferably 87 to 95. In the glass according to the fourth embodiment, the value of the expression (C) is 87 to 95.

When the value of the expression (C) is 87 or more, a relative dielectric constant and the dielectric loss tangent in the high frequency region are reduced.

In the glasses according to the first to third embodiments, the value of the expression (C) is preferably 87 or more, more preferably 87.5 or more, still more preferably 88 or more, even more preferably 88.5 or more, even still more preferably 88.7 or more, and yet still more preferably 89 or more.

In the glass according to the fourth embodiment, the value of the expression (C) is preferably 87.5 or more, more preferably 88 or more, still more preferably 88.5 or more, even more preferably 88.7 or more, even still more preferably 89 or more, and yet still more preferably 89.5 or more.

When the value of the expression (C) is 95 or less, a temperature $T_2$ at which a glass viscosity is $10^2$ dPa·s (hereinafter, referred to as a temperature $T_2$) is lowered.

In the glasses according to the first to third embodiments, the value of the expression (C) is more preferably 93 or less, still more preferably 92 or less, even more preferably 91 or less, and even still more preferably 90 or less.

In the glass according to the fourth embodiment, the value of the expression (C) is preferably 93 or less, more preferably 92 or less, still more preferably 91 or less, and even more preferably 90 or less.

In the glass according to the present invention, when an expression (D) is a content ratio represented by $[Al_2O_3]/[B_2O_3]$, a value of the expression (D) is preferably 0.1 to 0.3. When the value of the expression (D) is within the above range, the acid resistance of the glass is improved.

The value of the expression (D) is more preferably 0.12 or more, still more preferably 0.13 or more, and particularly preferably 0.15 or more.

The value of the expression (D) is more preferably 0.28 or less, still more preferably 0.26 or less, even more preferably 0.25 or less, even still more preferably 0.23 or less, and yet still more preferably 0.2 or less.

In the glasses according to the first to third embodiments, when the expression (E) is a content ratio represented by $[MgO]/([MgO]+[CaO]+[SrO]+[BaO])$, the value of the expression (E) is preferably 0.1 or more. In the glasses according to the first to third embodiments, when the value of the expression (E) is within the above range, the phase separation property and the acid resistance of the glass are improved.

In the glasses according to the first to third embodiments, the value of the expression (E) is more preferably 0.2 or more, still more preferably 0.25 or more, even more preferably 0.3 or more, even still more preferably 0.35 or more, yet still more preferably 0.4 or more, and yet even more preferably 0.45 or more.

In the glasses according to the first to third embodiments, the value of the expression (E) is not particularly limited in upper limit, and is preferably 0.8 or less, more preferably 0.7 or less, and still more preferably 0.6 or less since the deterioration of the moisture resistance and the increase in surface devitrification temperature can be prevented.

In the glass according to the fourth embodiment, the value of the expression (E) is 0.5 to 1. In the glass according to the fourth embodiment, when the value of the expression (E) is within the above range, the phase separation property and the acid resistance of the glass are improved.

In the glass according to the fourth embodiment, the value of the expression (E) is more preferably 0.52 or more, still more preferably 0.54 or more, even more preferably 0.56 or more, even still more preferably 0.58 or more, and yet still more preferably 0.6 or more.

In the glass according to the fourth embodiment, when the value of the expression (E) is 1 or less, the deterioration of the moisture resistance and the increase in surface devitrification temperature can be prevented. In the glass according to the fourth embodiment, the value of the expression (E) is preferably 0.9 or less, more preferably 0.8 or less, still more preferably 0.75 or less, even more preferably 0.7 or less, even still more preferably 0.65 or less, and yet still more preferably 0.6 or less.

In the glass according to the present invention, when an expression (F) is a content ratio represented by $([MgO]+[CaO]+[SrO]+[BaO])/[Al_2O_3]$, a value of the expression (F) is preferably 0.5 to 1.4. When the value of the expression (F) is 0.5% or more, the increase in surface devitrification temperature can be prevented. Accordingly, the glass quality is improved, and the productivity in producing a glass sheet is improved.

The value of the expression (F) is more preferably 0.6 or more, still more preferably 0.7 or more, even more preferably 0.8 or more, even still more preferably 0.85 or more, yet still more preferably 0.9 or more, yet even more preferably 0.95 or more, yet even still more preferably 0.97 or more, and further yet even still more preferably 1 or more.

When the value of the expression (F) is 1.4 or less, the acid resistance and the phase separation property of the glass are improved.

The value of the expression (F) is more preferably 1.3 or less, still more preferably 1.2 or less, and even more preferably 1.1 or less.

In the glass according to the present invention, when an expression (G) is a content ratio represented by $[BaO]/[MgO]$, a value of the expression (G) is preferably 0.01 to 3.

When the value of the expression (G) is 0.01 or more, the moisture resistance and the phase separation property of the glass are improved. The value of the expression (G) is more preferably 0.02 or more, still more preferably 0.03 or more, even more preferably 0.04 or more, even still more preferably 0.05 or more, and yet still more preferably 0.06 or more.

When the value of the expression (G) is 3 or less, the deterioration of the acid resistance of the glass can be prevented. The value of the expression (G) is more preferably 2.5 or less, still more preferably 2 or less, even more preferably 1 or less, even still more preferably 0.5 or less, yet still more preferably 0.3 or less, yet even more preferably 0.2 or less, yet even still more preferably 0.15 or less, and further yet even still more preferably 0.1 or less.

In the glass according to the present invention, when an expression (H) is an amount represented by $[SiO_2]-[B_2O_3]$, a value of the expression (H) is preferably 20 to 50.

When the value of the expression (H) is 20 or more, the acid resistance of the glass is improved. The value of the expression (H) is more preferably 23 or more, still more preferably 25 or more, even more preferably 27 or more, even still more preferably 28 or more, yet still more preferably 29 or more, yet even more preferably 30 or more, yet even still more preferably 31 or more, and further yet even still more preferably 32 or more.

When the value of the expression (H) is 50 or less, the dielectric loss tangent in the high frequency region can be reduced. Dependence of the dielectric loss tangent on cooling can be reduced to prevent the deterioration of the dielectric loss tangent due to rapid cooling, resulting in excellent productivity.

The value of the expression (H) is more preferably 45 or less, still more preferably 40 or less, even more preferably 38 or less, even still more preferably 37 or less, yet still more preferably 36 or less, and yet even more preferably 35 or less.

In the glass according to the present invention, when an expression (I) is a content ratio represented by $([SrO]+[BaO])/([MgO]+[CaO])$, a value of the expression (I) is preferably 0.05 to 4.

When the value of the expression (I) is 0.05 or more, the dielectric loss tangent in the high frequency region can be reduced while maintaining the phase separation property of the glass. In addition, the moisture resistance of the glass is improved. The value of the expression (I) is more preferably 0.1 or more, still more preferably 0.2 or more, even more preferably 0.3 or more, even still more preferably 0.4 or more, and yet still more preferably 0.5 or more.

When the value of the expression (I) is 4 or less, the deterioration of the acid resistance of the glass can be prevented. The value of the expression (I) is more preferably 3 or less, still more preferably 2.5 or less, even more preferably 2 or less, even still more preferably 1.8 or less, yet still more preferably 1.6 or less, yet even more preferably 1.4 or less, yet even still more preferably 1.2 or less, and further yet even still more preferably 1 or less.

In the glass according to the first embodiment, when the expression (1) is a content ratio represented by $([MgO]+[CaO])/([MgO]+[CaO]+[SrO]+[BaO])$, the value of the expression (J) is 0.2 to 0.7.

When the value of the expression (J) is 0.2 or more, the phase separation property of the glass can be improved, and the deterioration of the acid resistance of the glass can be prevented. The value of the expression (1) is preferably 0.25 or more, more preferably 0.3 or more, still more preferably 0.35 or more, even more preferably 0.4 or more, even still more preferably 0.45 or more, and yet still more preferably 0.5 or more.

When the value of the expression (J) is 0.7 or less, the moisture resistance of the glass is improved. The value of the expression (1) is preferably or less, more preferably 0.68 or less, still more preferably 0.66 or less, even more preferably 0.64 or less, and even still more preferably 0.62 or less.

In the glass according to the second embodiment, when the expression (K) is a content ratio represented by $[SiO_2]/([SiO_2]+[B_2O_3])$, the value of the expression (K) is 0.59 to 0.7.

When the value of the expression (K) is 0.59 or more, the moisture resistance and the acid resistance of the glass are improved. The value of the expression (K) is preferably 0.6 or more, more preferably 0.62 or more, still more preferably 0.63 or more, even more preferably 0.64 or more, even still more preferably 0.65 or more, and yet still more preferably 0.66 or more.

When the value of the expression (K) is 0.7 or less, the meltability of the glass is improved. The value of the expression (K) is preferably 0.69 or less, and more preferably 0.68 or less.

In the glass according to the second embodiment, when the expression (L) is an amount represented by $119-(106\times[SiO_2]+60\times[AbO_3]+119\times[B_2O_3]+37\times[MgO]+32\times[CaO]+32\times[SrO]+33\times[BaO]+36\times[Li_2O]+20\times[Na_2O]+13\times[K_2O])$, the value of the expression (L) is 16 to 30.

The expression (L) is an index representing a scale of the basicity of an oxide, and when it is 16 or more, the moisture resistance of the glass is likely to be improved. The value represented by the expression (L) is preferably 16.1 or more, more preferably 16.2 or more, still more preferably 16.3 or more, even more preferably 16.4 or more, even still more preferably 16.5 or more, and yet still more preferably 16.6 or more.

When the value of the expression (L) is 30 or less, the deterioration of the acid resistance of the glass can be prevented. The value of the expression (L) is preferably 28 or less, more preferably 26 or less, still more preferably 24 or less, even more preferably 22 or less, even still more preferably 20 or less, and yet still more preferably 19 or less.

In the glass according to the present invention, when the expression (M) is an amount represented by $0.46\times[MgO]+0.36\times[CaO]+0.29\times[SrO]+0.26\times[BaO]$, the value of the expression (M) is preferably 1.5 to 2.5.

The expression (M) is an index of total alkaline earth metal cationic strength in the glass, and when the value of the expression (M) is 1.5 or more, the deterioration of the acid resistance of the glass can be prevented. The value of the expression (M) is more preferably 1.6 or more, still more preferably 1.7 or more, even more preferably 1.8 or more, even still more preferably 1.85 or more, and yet still more preferably 1.9 or more.

When the value of the expression (M) is 2.5 or less, the moisture resistance and the phase separation property of the glass are likely to be improved. The value of the expression (M) is more preferably 2.4 or less, still more preferably 2.3 or less, even more preferably 2.2 or less, even still more preferably 2.1 or less, yet still more preferably 2.05 or less, and particularly preferably 2 or less.

In the glass according to the present invention, when an expression (N) is $(0.46 \times [MgO]+0.36 \times [CaO]+0.29 \times [SrO]+0.26 \times [BaO])/([MgO]+[CaO]+[SrO]+[BaO])$, a value of the expression (N) is preferably 0.3 to 0.4.

The expression (N) is an index of average alkaline earth metal cationic strength in the glass, and when the value of the expression (N) is 0.3 or more, the dielectric loss tangent in the high frequency region is easily reduced. In addition, the moisture resistance and the phase separation property of the glass are likely to be improved. The value of the expression (N) is more preferably 0.32 or more, still more preferably 0.33 or more, even more preferably 0.34 or more, and particularly preferably 0.35 or more.

When the value of the expression (N) is 0.4 or less, the deterioration of the acid resistance of the glass can be prevented. The value of the expression (N) is more preferably 0.39 or less, still more preferably 0.38 or less, and even more preferably 0.37 or less.

In the glass according to the present invention, when an expression (O) is a content ratio represented by $([CaO]+[SrO])/([MgO]+[CaO]+[SrO]+[BaO])$, a value of the expression (O) is preferably 0.3 to 0.8.

When the value of the expression (O) is 0.3 or more, the moisture resistance and the phase separation property of the glass are improved. The value of the expression (O) is more preferably 0.35 or more, still more preferably 0.4 or more, even more preferably 0.45 or more, even still more preferably 0.47 or more, yet still more preferably 0.5 or more, and particularly preferably 0.52 or more.

When the value of the expression (O) is 0.8 or less, the deterioration of the acid resistance of the glass can be prevented. The value of the expression (O) is more preferably 0.75 or less, still more preferably 0.7 or less, even more preferably 0.67 or less, even still more preferably 0.65 or less, yet still more preferably 0.62 or less, and particularly preferably 0.6 or less.

In the glass according to the present invention, when an expression (P) is a content ratio represented by $[CaO]/[SrO]$, a value of the expression (P) is preferably 0.1 to 4.

When the value of the expression (P) is 0.1 or more, the deterioration of the acid resistance of the glass can be prevented. The value of the expression (P) is more preferably 0.2 or more, still more preferably 0.25 or more, even more preferably 0.3 or more, even still more preferably 0.35 or more, yet still more preferably 0.4 or more, and particularly preferably 0.45 or more.

When the value of the expression (P) is 4 or less, the moisture resistance and the phase separation property of the glass are improved. The value of the expression (P) is more preferably 3 or less, still more preferably 2 or less, even more preferably 1.6 or less, even still more preferably 1.2 or less, yet still more preferably 1 or less, and particularly preferably 0.8 or less.

The glass according to the present invention may contain Fe in order to improve the meltability of the glass. However, from the viewpoint of coloring of the glass, a decrease in transmittance in a visible region, and a decrease in relative dielectric constant and dielectric loss tangent in the high frequency region, the content of Fe is preferably 0.5 mol% or less, more preferably 0.2 mol% or less, and still more preferably 0.1 mol% or less calculated as $Fe_2O_3$.

The content of Fe is preferably 0.15% or less, more preferably 0.1% or less, still more preferably 0.05% or less, and even more preferably 0.03% or less in mass% based on oxides calculated as $Fe_2O_3$.

In the glass according to the present invention, a $\beta$-OH value is preferably 0.05 mm$^{-1}$ to 1.0 mm$^{-1}$. The $\beta$-OH value is an index of a water content in the glass, and is determined by mirror-polishing both surfaces of a glass sample to have a sample thickness of 0.7 mm to 2.0 mm, and then measuring the transmittance using FT-IR in a wave number range of 4000 cm$^{-1}$ to 2000 cm$^{-1}$. The transmittance at a wave number of 4000 cm$^{-1}$ is defined as $\tau_1$ (%), a minimum transmittance at a wave numbers of 3700 cm$^{-1}$ to 3500 cm$^{-1}$ is defined as $\tau_2$ (%), and the thickness of the glass sample is defined as X (mm), and the $\beta$-OH value is calculated determined according to the following equation. Note that, unless otherwise specified, the thickness of the glass sample is adjusted such that $\tau_2$ is in the range of 20% to 60%.

$$\beta\text{-OH (mm}^{-1}) = (1/X)\log_{10}(\tau_1/\tau_2)$$

When the $\beta$-OH value is 0.05 mm$^{-1}$ or more, a resistance value at the temperature $T_2$ at which the glass viscosity is $10^2$ dPa·s is reduced, which is suitable for melting the glass by electrical heating, and the number of bubble defects in the glass is small. Specifically, when the $\beta$-OH value is 0.05 mm$^{-1}$ or more, the meltability is improved. When the $\beta$-OH value is 1.0 mm$^{-1}$ or less, the bubble defects in the glass can be prevented. The $\beta$-OH value is more preferably 0.8 mm$^{-1}$ or less, still more preferably 0.7 mm$^{-1}$ or less, and even more preferably 0.6 mm$^{-1}$ or less. The $\beta$-OH value is more preferably 0.1 mm$^{-1}$ or more, still more preferably 0.2 mm$^{-1}$ or more, even more preferably 0.25 mm$^{-1}$ or more, even still more preferably 0.3 mm$^{-1}$ or more, and particularly preferably 0.35 mm$^{-1}$ or more.

In the glass according to the present invention, the $\Delta\beta$-OP calculated by the following method is 0 mm$^{-1}$ to 0.1 mm$^{-1}$.

When the $\Delta\beta$-OP is 0 mm$^{-1}$ to 0.1 mm$^{-1}$, the glass exhibits excellent moisture resistance. The $\Delta\beta$-OP is preferably 0.08 mm$^{-1}$ or less, more preferably 0.07 mm$^{-1}$ or less, and still more preferably 0.06 mm$^{-1}$ or less.

Method: β-OH of a glass sheet made of an alkali-free glass and having a thickness of 1.0 mm is measured, and then the glass sheet is left standing at a temperature of 60°C and a relative humidity of 95%. After 90 hours from a start of the standing, β-OH of the glass sheet is measured A value obtained by subtracting the β-OH before the standing from the β-OH after the standing is calculated as the Δβ-OH.

The glass according to the present invention is preferably substantially free from alkali metal oxide such as $Li_2O$, $Na_2O$, or $K_2O$. In the present invention, "substantially free from alkali metal oxide" means that the alkali metal oxide is not contained except for inevitable impurities mixed from raw materials and the like, that is, the alkali metal oxide is not intentionally contained

For example, a total content of the alkali metal oxide is preferably 0.3% or less, more preferably 0.2% or less, still more preferably 0.1% or less, even more preferably 0.08% or less, even still more preferably 0.05% or less, and particularly preferably 0.03% or less.

However, the alkali metal oxide may be contained in a predetermined amount for the purpose of obtaining specific effects (lowering a strain point, lowering a glass transition temperature ($T_g$), lowering an annealing point, lowering the temperature $T_2$, lowering a temperature $T_4$ at which the glass viscosity is $10^4$ dPa s (hereinafter, referred to as the temperature $T_4$), reducing electrical resistance, and the like). Specifically, when an expression (Q) is a total content represented by $[Li_2O]+[Na_2O]+[K_2O]$, among alkali metal oxides, at least one selected from the group consisting of $Li_2O$, $Na_2O$, and $K_2O$ may be contained such that a value of the expression (Q) is 0.5 or less. When the value of the expression (Q) is 0.5 or less, the dielectric loss tangent in the high frequency region is reduced, and the glass is suitable for use as a substrate for a thin film transistor (TFT).

The value of the expression (Q) is more preferably 0.4 or less, still more preferably 0.35 or less, even more preferably 0.3 or less, even still more preferably 0.25 or less, yet still more preferably 0.2 or less, yet even more preferably 0.15 or less, yet even still more preferably 0.1 or less, and further yet even still more preferably 0.05 or less.

In the glass according to the present invention, when an expression (R) is a content ratio represented by $[Li_2O]/([Li_2O]+[Na_2O]+[K_2O])$, a value of the expression (R) is preferably 0.3 or more. When the value of the expression (R) is within the above range, the productivity of the glass can be improved by lowering the strain point, $T_g$, the annealing point, the temperature $T_2$, and the temperature $T_4$, or reducing the resistance value of the glass, while reducing the relative dielectric constant and the dielectric loss tangent in the high frequency region.

The value of the expression (R) is more preferably 0.4 or more, still more preferably 0.5 or more, even more preferably 0.6 or more, and particularly preferably 0.7 or more. The value of the expression (R) is preferably 0.95 or less.

In order to improve a refining property of the glass, the glass according to the present invention may contain at least one selected from the group consisting of $SnO_2$, Cl, and $SO_3$ in a total content of 0.5% or less. The total content of these components is preferably 0.4% or less, more preferably 0.3% or less, still more preferably 0.2% or less, and even more preferably 0.1% or less.

The total content of $SnO_2$, Cl, and $SO_3$ is preferably 0.5% or less, more preferably 0.3% or less, and still more preferably 0.1% or less in mass% based on oxides.

The content of $SnO_2$ is preferably 0.5% or less, more preferably 0.4% or less, and still more preferably 0.3% or less.

The content of $SnO_2$ is preferably 0.3% or less, more preferably 0.2% or less, and still more preferably 0.1% or less in mass% based on oxides.

In order to improve the acid resistance of the glass while reducing the relative dielectric constant and the dielectric loss tangent in the high frequency region, the glass according to the present invention may contain, as a trace component, at least one selected from the group consisting of $Sc_2O_3$, $TiO_2$, ZnO, $Ga_2O_3$, $GeO_2$, $Y_2O_3$, $ZrO_2$, $Nb_2O_5$, $In_2O_3$, $TeO_2$, $HfO_2$, $Ta_2O_5$, $WO_3$, $Bi_2O_3$, $La_2O_3$, $Gd_2O_3$, $Yb_2O_3$, and $Lu_2O_3$. In order to improve the acid resistance of the glass, a total content of the trace component is preferably 0.1% or more, or 0.15% or more. On the other hand, in order to prevent the increase in surface devitrification temperature and a decrease in phase separation property of the glass, the total content of the trace component is preferably 1% or less, and more preferably 0.8% or less, 0.6% or less, 0.4% or less, or 0.25% or less.

Note that, among the above trace components, it is preferable to contain $ZrO_2$ from the viewpoint of the moisture resistance In order to improve the acid resistance while preventing the deterioration of the moisture resistance, the total content of the trace component is preferably 0.1% or more, or 0.3% or more, and in order to prevent the increase in surface devitrification temperature and the decrease in phase separation property, the total content of the trace component is preferably 1% or less, or 0.6% or less. Among the above trace components, it is preferable to contain $Y_2O_3$ from the viewpoint of the surface devitrification temperature and the moisture resistance In order to improve the acid resistance while preventing the increase in surface devitrification temperature and the deterioration of the moisture resistance, the total content of the trace component is preferably 0.1% or more, or 0.3% or more, and in order to prevent the decrease in phase separation property, the total content of the trace component is preferably 0.8% or less, or 0.4% or less.

The glass according to the present invention may contain only one or two or more of the above trace components

In order to improve the meltability and the like of the glass, the glass according to the present invention may

contain $P_2O_5$. A content of $P_2O_5$ is preferably 2% or less, more preferably 1% or less, still more preferably 0.5% or less, even more preferably 0.3% or less, and even still more preferably 0.1% or less. On the other hand, since $P_2O_5$ may volatile in glass forming equipment, re-aggregate, and fall on the glass sheet to cause defects of foreign substances, the content of $P_2O_5$ is yet still more preferably 0.05% or less, yet even more preferably 0.01% or less, and yet even still more preferably 0.005% or less, and most preferably the glass is substantially free from $P_2O_5$. In the present invention, "substantially free from $P_2O_5$" means that $P_2O_5$ is not contained except for inevitable impurities mixed from raw materials and the like, that is, $P_2O_5$ is not intentionally contained

The glass according to the present invention may contain F for the purpose of improving the meltability of the glass, lowering the strain point of the glass, lowering the $T_g$, lowering the annealing point, reducing the dielectric loss tangent, and the like. A content of F is preferably 0.1 mol% or more, more preferably 0.2 mol% or more, and still more preferably 0.4 mol% or more. However, from the viewpoint of preventing a decrease in glass quality due to volatilization of F, the content of F is preferably 1.5 mol% or less, more preferably 1 mol% or less, still more preferably 0.5 mol% or less, and even more preferably 0.1 mol% or less.

The content of F is preferably 0.01% or more, and more preferably 0.03% or more in mass%. An upper limit is preferably 0.2% or less, more preferably 0.1% or less, and still more preferably 0.05% or less.

The glass according to the present invention may contain at least one selected from the group consisting of $Se_2O_3$, $TeO_2$, $Ga_2O_3$, $In_2O_3$, $GeO_2$, CdO, BeO, and $Bi_2O_3$ in order to improve the meltability, the refining property, the formability, and the like of the glass, to obtain absorption at a specific wavelength, and to improve the density, the hardness, the bending rigidity, the durability, and the like. From such viewpoints, a total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

The glass according to the present invention may contain a rare earth oxide or a transition metal oxide in order to improve the meltability, the refining property, the formability, and the like of the glass and to improve the hardness of the glass, such as the Young's modulus.

The glass according to the present invention may contain, as the rare earth oxide, at least one selected from the group consisting of $Sc_2O_3$, $Y_2O_3$, $La_2O_3$, $Ce_2O_3$, $Pr_2O_3$, $Nd_2O_3$, $Pm_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, and $Lu_2O_3$. A total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

The glass according to the present invention may contain, as the transition metal oxide, at least one selected from the group consisting of $V_2O_5$, $Ta_2O_3$, $Nb_2O_5$, $WO_3$, $MoO_3$, and $HfO_2$. A total content of these components is preferably 2% or less, more preferably 1% or less, still more preferably 0.5% or less, even more preferably 0.3% or less, even still more preferably 0.1% or less, yet still more preferably 0.05% or less, and yet even more preferably 0.01% or less.

In order to improve the meltability and the like of the glass, the glass according to the present invention may contain $ThO_2$, which is an actinide oxide. A content of $ThO_2$ is preferably 2% or less, more preferably 1% or less, still more preferably 0.5% or less, even more preferably 0.3% or less, even still more preferably 0.1% or less, yet still more preferably 0.05% or less, yet even more preferably 0.01% or less, and yet even still more preferably 0.005% or less.

In the glass according to the present invention, an ultraviolet transmittance is preferably 2% or more as measured under the following conditions. When the ultraviolet transmittance is 2% or more, the glass exhibits an excellent phase separation property. The ultraviolet transmittance is more preferably 10% or more, still more preferably 30% or more, and even more preferably 50% or more. In addition, the ultraviolet transmittance is generally 90% or less.

Conditions: a glass sheet having a thickness of 2.0 mm is heated to the temperature $T_4$ (°C) at which the glass viscosity is $10^4$ dPa·s, and annealed at a rate of 40°C/min. After annealing to room temperature (25°C), the glass sheet is mirror-finished on both surfaces to a have a thickness of 1.3 mm, and a parallel light transmittance of the glass at a wavelength of 308 nm is measured In the present specification, the parallel light transmittance is a value measured according to a method in accordance with JIS-K-7136 (2000), and is determined by subtracting a diffuse transmittance from a total light transmittance

In the glass according to the present invention, the dielectric loss tangent (tan $\delta$) at a frequency of 35 GHz is preferably 0.005 or less. When the dielectric loss tangent at a frequency of 35 GHz is 0.005 or less, the dielectric loss can be reduced in a high frequency region at a frequency of more than 30 GHz The dielectric loss tangent at a frequency of 35 GHz is more preferably 0.004 or less, still more preferably 0.003 or less, even more preferably 0.0025 or less, even still more preferably 0.002 or less, and yet still more preferably 0.0015 or less. It is not particularly limited in lower limit, and is preferably, for example, 0.0005 or more.

The dielectric loss tangent at 10 GHz is preferably 0.003 or less, more preferably 0.0025 or less, still more preferably 0.002 or less, and even more preferably 0.0015 or less. It is not particularly limited in lower limit, and is preferably, for example, 0.0005 or more.

In the glass according to the present invention, the relative dielectric constant at a frequency of 35 GHz is preferably 5 or less. When the relative dielectric constant at a frequency of 35 GHz is 5 or less, the dielectric loss can be reduced in the high frequency region. The relative dielectric constant at a frequency of 35 GHz is more preferably 4.8 or less, still more preferably 47 or less, even more preferably 4.6 or less, even still more preferably 4.5 or less, even still more preferably 4.3 or less, yet still more preferably 4.2 or less, yet even more preferably 4.1 or less, and yet even still more preferably 4 or less. It is not particularly limited in lower limit, and is preferably, for example, 3 or more.

The relative dielectric constant at 10 GHz is preferably 5 or less, more preferably 4.8 or less, still more preferably 4.6 or less, even more preferably 4.4 or less, and even still more preferably 4.3 or less. It is not particularly limited in lower limit, and is preferably, for example, 3 or more.

When the glass transition temperature is defined as $T_g$ (°C), a dielectric loss tangent at 10 GHz when the glass is heated to $T_g+100$°C and then cooled to $T_g-150$°C at a rate of 10°C/min is defined as $\tan \delta_{10}$, and similarly, a dielectric loss tangent at 10 GHz when the glass is heated to $T_g+100$°C and then cooled to $T_g-150$°C at a rate of 100°C/min is defined as $\tan \delta_{100}$, the glass according to the present invention preferably satisfies $-0.0003 \leq (\tan \delta_{100} - \tan \delta_{10}) \leq 0.0003$. When the above relationship is satisfied, deterioration of the dielectric loss tangent $\tan \delta$ can be prevented even in the case of rapid cooling in the production of the glass.

In addition, when a dielectric loss tangent at 10 GHz is defined as $\tan \delta_A$, the glass transition temperature is defined as $T_g$, and the dielectric loss tangent at 10 GHz when the glass is heated to $T_g+100$°C and then cooled to $T_g-150$°C at a rate of 100°C/min is defined as $\tan \delta_{100}$, the glass according to the present invention preferably satisfies $-0.0003 \leq (\tan \delta_{100} - \tan \delta_A) \leq 0.0003$.

In order for the $\tan \delta_{100} - \tan \delta_A$ to satisfy the above range, it is necessary to set the glass composition such that the $\tan \delta_{100} - \tan \delta_{10}$ satisfies the above range, and to adjust the cooling rate and the time for cooling the glass from $T_g+100$°C to $T_g-150$°C. During this time, any temperature history can be taken, and an equivalent cooling rate A based on the $\tan \delta$ of the glass, which is to be described later, is preferably 0.01°C/min or more and 1000°C/min or less. When the equivalent cooling rate A based on the $\tan \delta$ is 0.01°C/min or more, the productivity for producing the glass is improved.

The equivalent cooling rate A based on the $\tan \delta$ is more preferably 0.1°C/min or more, still more preferably 1°C/min or more, even more preferably 2°C/min or more, even still more preferably 5°C/min or more, yet still more preferably 10°C/min or more, yet even more preferably 20°C/min or more, yet even still more preferably 30°C/min or more, yet even still more preferably 40°C/min or more, yet even still more preferably 50°C/min or more, yet even still more preferably 60°C/min or more, further yet even still more preferably 70°C/min or more, particularly preferably 80°C/min or more, and most preferably 90°C/min or more.

In addition, it is not preferable that the equivalent cooling rate A based on the $\tan \delta$ be more than 1000°C/min, since the $\tan \delta_{100} - \tan \delta_A$ is too small, that is, the dielectric loss tangent $\tan \delta_A$ deteriorates. The equivalent cooling rate A based on the $\tan \delta$ is more preferably 900°C/min or less, still more preferably 800°C/min or less, even more preferably 700°C/min or less, even still more preferably 600°C/min or less, yet still more preferably 500°C/min or less, yet even more preferably 400°C/min or less, yet even still more preferably 350°C/min or less, yet even still more preferably 300°C/min or less, further yet even still more preferably 250°C/min or less, and particularly preferably 200°C/min or less.

Equivalent cooling rate A based on $\tan \delta$:
A glass sheet is heated to $T_g+100$°C and then cooled to $T_g-150$°C at a constant cooling rate of X°C/min to produce a plurality of glasses, and the dielectric loss tangent $\tan \delta$ at 10 GHz is measured Linear regression is performed such that $\text{Log}(\tan \delta) = a \times \text{Log}(X) + b$ (a and b are constants). As an example of the cooling rate X°C/min, three levels of 1°C/min, 40°C/min, and 200°C/min may be used. The equivalent cooling rate A of the glass produced in any cooling history is inversely calculated based on the $\tan \delta$ using the above regression equation.

The glass according to the present invention preferably has a density of 2.58 g/cm$^3$ or less. Accordingly, a self-weight deflection is reduced, and handling of a large-sized substrate is facilitated. A weight of a device including the glass can be reduced. The density is more preferably 2.5 g/cm$^3$ or less, still more preferably 2.4 g/cm$^3$ or less, even more preferably 2.35 g/cm$^3$ or less, and even still more preferably 2.3 g/cm$^3$ or less. It is not particularly limited in lower limit, and is preferably, for example, 2 g/cm$^3$ or more.

Note that, the large-sized substrate is, for example, a substrate having at least one side of 1000 mm or more

The temperature $T_2$ of the alkali-free glass according to the present invention is preferably 1900°C or lower. When the $T_2$ is 1900°C or lower, the glass has excellent meltability and burden on the production equipment can be reduced. For example, the life of an equipment such as a furnace for melting the glass can be extended, and the productivity can be improved. In addition, defects derived from the furnace, for example, crack defects and Zr defects can be reduced. The $T_2$ is more preferably 1850°C or lower, still more preferably 1800°C or lower, even more preferably 1750°C or lower, even still more preferably 1700°C or lower, and yet still more preferably 1680°C or lower

The temperature $T_2$ is not particularly limited in lower limit, and is preferably, for example, 1500°C or higher.

The temperature $T_4$ of the alkali-free glass according to the present invention is preferably 1400°C or lower. When the temperature $T_4$ is 1400°C or lower, the glass has excellent formability. In addition, for example, by lowering the temperature at the time of forming the glass, it is possible to reduce an amount of volatile matter in an atmosphere around the glass and to further reduce the defects of the glass. Since the glass can be formed at a low temperature, the burden on the production equipment can be reduced. For example, the life of an equipment such as a float bath for forming the glass can be extended, and the productivity can be improved. The temperature $T_4$ is more preferably 1350°C or lower, still more preferably 1300°C or lower, even more preferably 1270°C or lower, and particularly preferably 1250°C or lower The temperature $T_4$ is not particularly limited in lower limit, and is preferably, for example, 1050°C or higher

The temperature $T_2$ and the temperature $T_4$ are determined according to a method defined in ASTM C965-96 (2017), by measuring the viscosity using a rotary viscometer, and determining the temperature at which the viscosity is $10^2$ dPa·s or $10^4$ dPa·s. Note that, in Examples to be described later, NBS 710 and NIST 717a were used as reference samples for device calibration

The glass transition temperature $T_g$ of the glass according to the present invention is preferably of 700°C or lower When the $T_g$ is 700°C or lower, it is possible to avoid the need to increase the temperature of an annealing device and to prevent a decrease in life of the annealing device. The $T_g$ is more preferably 680°C or lower, and still more preferably 650°C or lower. The temperature $T_g$ is not particularly limited in lower limit, and is preferably, for example, 450°C or higher.

The glass according to the present invention preferably has an annealing point of 700°C or lower. When the annealing point is 700°C or lower, it is possible to avoid the need to increase the temperature of the annealing device and to prevent the decrease in life of the annealing device. The annealing point is more preferably 680°C or lower, and still more preferably 650°C or lower

The annealing point is not particularly limited in lower limit, and is preferably, for example, 450°C or higher.

The glass according to the present invention preferably has a surface devitrification temperature of 1400°C or lower. When the surface devitrification temperature is 1400°C or lower, the glass has excellent formability. It is possible to prevent a decrease in transmittance due to generation of crystals inside the glass during formation. In addition, the burden on the production equipment can be reduced. For example, the life of an equipment such as a float bath for forming the glass can be extended, and the productivity can be improved.

The surface devitrification temperature is more preferably 1280°C or lower, still more preferably 1260°C or lower, even more preferably 1255°C or lower, even still more preferably 1250°C or lower, yet still more preferably 1245°C or lower, and yet even more preferably 1240°C or lower.

The surface devitrification temperature is not particularly limited in lower limit, and is preferably, for example, 900°C or higher.

The surface devitrification temperature in the present invention is determined as follows. That is, pulverized glass particles are charged into a platinum dish, a heat treatment is performed for 17 hours in an electric furnace having a controlled constant temperature, a maximum temperature at which crystals are precipitated on the surface of the glass and a minimum temperature at which no crystals are precipitated are observed using an optical microscope after the heat treatment, and an average value thereof is defined as the surface devitrification temperature.

The glass according to the present invention preferably has an average thermal expansion coefficient at 50°C to 350°C of $20 \times 10^{-7}$/°C or more. When the average thermal expansion coefficient at 50°C to 350°C is $20 \times 10^{-7}$/°C or more, in the case of using the glass as a glass substrate, it is possible to prevent breakage due to an excessively large difference in expansion coefficient from a metal film formed on the glass substrate. The average thermal expansion coefficient at 50°C to 350°C is more preferably $25 \times 10^{-7}$/°C or more. On the other hand, the average thermal expansion coefficient at 50°C to 350°C is preferably $50 \times 10^{-7}$/°C or less. When the average thermal expansion coefficient at 50°C to 350°C is $50 \times 10^{-7}$/°C or less, it is possible to prevent the breakage of the glass during a product production process for a high frequency device and the like. The average thermal expansion coefficient at 50°C to 350°C is more preferably $40 \times 10^{-7}$/°C or less, still more preferably $37 \times 10^{-7}$/°C or less, and even more preferably $35 \times 10^{-7}$/°C or less.

The glass according to the present invention preferably has a Young's modulus of 40 GPa or more. When the Young's modulus is within the above range, it is possible to prevent the occurrence of defects such as warping, bending, and breakage of the glass substrate after the formation of the metal film, for example, a Cu film, which is performed in the production process for a high frequency device. The Young's modulus is more preferably 43 GPa or more, still more preferably 45 GPa or more, and even more preferably 47 GPa or more.

The Young's modulus is not particularly limited in upper limit, and is preferably, for example, 70 GPa or less.

The glass according to the present invention preferably has a specific elastic modulus of 20 MN·m/kg or more. When the specific elastic modulus is within the above range, a deflection amount of the glass can be reduced. The specific elastic modulus is more preferably 21 MN·m/kg or more, and still more preferably 22 MN·m/kg or more.

The specific elastic modulus is not particularly limited in upper limit, and is preferably, for example, 35 MN·m/kg or less, more preferably 30 MN·m/kg or less, and still more preferably 25 MN·m/kg or less.

In the glass according to the present invention, an elution amount of a glass component per unit surface area when immersed in a 45°C aqueous solution containing 6 mass% of $HNO_3$ and 5 mass% of $H_2SO_4$ for 170 seconds is preferably 0.12 mg/cm$^2$ or less. When the elution amount of the glass component is within the above range, the acid resistance is good. The elution amount of the glass component is more preferably 0.1 mg/cm$^2$ or less, still more preferably 0.08 mg/cm$^2$ or less, and particularly preferably 0.05 mg/cm$^2$ or less.

The elution amount of the glass component is not particularly limited in lower limit, and is preferably, for example, 0.0001 mg/cm$^2$ or more.

When the glass according to the present invention is formed into a glass sheet having a thickness of 1 mm, a haze value of the glass sheet is preferably 0.5% or less. When the haze value is within the above range, the glass has an excellent phase separation property and for example, when the glass substrate is subjected to acid cleaning, it is possible to suitably prevent local irregularities from being generated on the substrate surface. Accordingly, the transmission loss of the high frequency signal can be reduced. The haze value is more preferably 0.4% or less, still more preferably 0.3% or less, even more preferably 0.2% or less, and even still more preferably 0.1% or less.

The haze value is not particularly limited in lower limit, and is preferably, for example, 0.01% or more.

A glass sheet containing the glass according to the present invention (hereinafter, referred to as the glass sheet according to the present invention) is suitable for a glass substrate for a high frequency device, a panel antenna, a window glass, a vehicular window glass, a cover glass for a touch panel, and the like due to the above properties.

The FIGURE is a cross-sectional view showing an example of a configuration of a circuit substrate for a high frequency device. A circuit substrate 1 shown in the FIGURE includes a glass substrate 2 having insulating properties, a first wiring layer 3 formed on a first main surface 2a of the glass substrate 2, and a second wiring layer 4 formed on a second main surface 2b of the glass substrate 2. The first and second wiring layers 3 and 4 form a microstrip line as an example of a transmission line. The first wiring layer 3 constitutes a signal wiring, and the second wiring layer 4 constitutes a ground line. However, structures of the first and second wiring layers 3 and 4 are not limited thereto. The wiring layer may be formed only on one main surface of the glass substrate 2.

The first and second wiring layers 3 and 4 are layers formed of a conductor, and thicknesses thereof are generally about 0.1 $\mu$m to 50 $\mu$m. The conductor forming the first and second wiring layers 3 and 4 is not particularly limited, and for example, a metal such as copper, gold, silver, aluminum, titanium, chromium, molybdenum, tungsten, platinum, or nickel, or an alloy or a metal compound containing at least one of these metals is used. The structure of the first and second wiring layers 3 and 4 is not limited to a single-layer structure, and may, for example, have a multi-layer structure such as a laminated structure of a titanium layer and a copper layer. A method of forming the first and second wiring layers 3 and 4 is not particularly limited, and various known forming methods such as a printing method using a conductor paste, a dipping method, a plating method, a vapor deposition method, and a sputtering method can be applied.

In the case where the glass sheet according to the present invention is used as the glass substrate 2, the glass substrate 2 preferably has a dielectric loss tangent (tan $\delta$) at a frequency of 35 GHz of 0.005 or less. When the dielectric loss tangent at a frequency of 35 GHz of the glass substrate 2 is 0.005 or less, the dielectric loss can be reduced in a high frequency region of more than 30 GHz. The dielectric loss tangent at a frequency of 35 GHz of the glass substrate 2 is more preferably 0.004 or less, still more preferably 0.003 or less, even more preferably 0.0025 or less, even still more preferably 0.002 or less, and yet still more preferably 0.0015 or less.

It is preferable that a relative dielectric constant at a frequency of 35 GHz of the glass substrate 2 be 5 or less, since the dielectric loss can be reduced in the high frequency region. The relative dielectric constant at a frequency of 35 GHz of the glass substrate 2 is more preferably 4.8 or less, still more preferably 47 or less, even more preferably 4.6 or less, even still more preferably 4.5 or less, yet still more preferably 4.3 or less, yet even more preferably 4.2 or less, yet even still more preferably 4.1 or less, and further yet even still more preferably 4 or less.

Further, the glass substrate 2 includes the main surfaces 2a and 2b and end surfaces. It is preferable that at least one of the main surfaces 2a and 2b of the glass substrate 2 on which the first and second wiring layers 3 and 4 are formed preferably have an arithmetic mean roughness Ra of 1.5 nm or less as a surface roughness thereof, and it is more preferable that both main surfaces have an arithmetic mean roughness Ra of 1.5 nm or less. When the arithmetic mean roughness Ra of the main surface is within the above range, skin resistance of the first and second wiring layers 3 and 4 can be decreased even in the case where a skin effect occurs in the first and second wiring layers 3 and 4 in a high frequency region of more than 30 GHz, and accordingly, the conductor loss is reduced. The arithmetic mean roughness Ra of the main surfaces 2a and 2b of the glass substrate 2 is still more preferably 1 nm or less, and even more preferably 0.5 nm or less. The main surface of the glass substrate 2 refers to a surface on which the wiring layer is formed. In the case where the wiring layer is formed on one main surface, it is sufficient that the value of the arithmetic mean roughness Ra of the one main surface satisfies 1.5 nm or less. Note that, the arithmetic mean roughness Ra in the present specification means a value according to JIS B0601 (2001).

The surface roughness of the main surfaces 2a and 2b of the glass substrate 2 can be implemented by a polishing treatment on the surface of the glass substrate 2 as necessary. As the polishing treatment on the surface of the glass substrate 2, for example, polishing using a polishing agent containing cerium oxide, colloidal silica, or the like as a main component and a polishing pad; polishing using a polishing slurry containing a polishing agent and an acidic or alkaline dispersion medium and a polishing pad; or polishing using an acidic or alkaline etchant can be applied These polishing treatments are applied according to the surface roughness of a base sheet of the glass substrate 2. For example, preliminary polishing and final polishing may be applied in combination. The end surface of the glass substrate 2 is preferably chamfered in order to prevent breakage, cracking, and chipping of the glass substrate 2 caused by the end surface during a process flow. A form of chamfering may be C chamfering, R chamfering, thread chamfering, or the like.

By using such a glass substrate 2, the transmission loss of the circuit substrate 1 at a frequency of 35 GHz can be reduced. For example, the transmission loss can be reduced to 1 dB/cm or less. Therefore, since properties such as a quality and intensity of a high frequency signal, particularly a high frequency signal at a frequency of more than 30 GHz, and further a high frequency signal at a frequency of 35 GHz or more are maintained, it is possible to provide the glass substrate 2 and the circuit substrate 1 suitable for a high frequency device that copes with such a high frequency signal. That is, the properties and the quality of the high frequency device that copes with such a high frequency signal can be improved. The transmission loss of the circuit substrate 1 at a frequency of 35 GHz is preferably 0.5 dB/cm or less.

The glass sheet according to the present invention is not particularly limited in shape, and preferably has a thickness of 0.7 mm or less. When the thickness of the glass sheet is 0.7 mm or less, in the case of using the glass sheet as a glass substrate for a high frequency device, it is possible to reduce the thickness and the size of the high frequency device, and further improve production efficiency. In addition, the ultraviolet transmittance is improved, and an ultraviolet curable material can be used in the production process for the device to improve the productivity. The thickness of the glass sheet is more preferably 0.6 mm or less, still more preferably 0.5 mm or less, even more preferably 0.4 mm or less, even still more preferably 0.3 mm or less, yet still more preferably 0.2 mm or less, and yet even more preferably 0.1 mm or less. The lower limit is about 0.01 mm.

In the case where the glass sheet is a large-sized substrate, the length of at least one side is preferably 1000 mm or more, more preferably 1500 mm or more, and still more preferably 1800 mm or more. The upper limit is not particularly limited, and the size of one side is generally 4000 mm or less. The glass sheet is preferably rectangular

Next, a method for producing a glass sheet according to the present invention will be described. In the case of producing a glass sheet, a melting step of heating a glass raw material to obtain a molten glass, a refining step of removing bubbles from the molten glass, a forming step of forming the molten glass into a sheet shape to obtain a glass ribbon, and an annealing step of annealing the glass ribbon to room temperature are performed. Alternatively, a method may be used in which the molten glass is formed into a block shape, annealed, and then cut and polished to produce a glass sheet.

In the melting step, raw materials are prepared to have a target glass composition, and the raw materials are continuously charged into a melting furnace and heated to preferably about 1450°C to 1750°C to obtain a molten glass. Since the alkali-free glass according to the present embodiment has a low resistance value in a temperature range in which the glass raw material is melted, for example, around 1500°C, it is preferable to use an electric melting furnace as the melting furnace and to melt the glass by electrical heating However, the electrical heating and heating by a burner may be used in combination.

As the raw materials, an oxide, a carbonate, a nitrate, a hydroxide, a halide such as a chloride, and the like can also be used. When there is a step of bringing the molten glass into contact with platinum in the melting or refining step, fine platinum particles may be eluted into the molten glass and mixed as foreign substances in the obtained glass sheet. The use of nitrate raw materials has an effect of preventing generation of platinum foreign substances.

Examples of the nitrate include strontium nitrate, barium nitrate, magnesium nitrate, and calcium nitrate. It is more preferable to use strontium nitrate. As for the particle size of the raw material, raw materials having a large particle diameter of several hundred $\mu$m to such an extent that undissolved residue does not occur to raw materials having a small particle diameter of several $\mu$m to such an extent that scattering does not occur at the time of conveying the raw material and aggregation does not occur as secondary particles, can be appropriately used. A granular body can also be used. In order to prevent scattering of the raw material, a water content in the raw material can also be appropriately adjusted. Melting conditions such as the $\beta$-OP value and an oxidation-reduction degree of Fe (redox [$Fe^{2+}/(Fe^{2+}+Fe^{3+})$]) can also be appropriately adjusted.

The next refining step is a step of removing bubbles from the molten glass obtained in the above melting step. As the refining step, a defoaming method under a reduced pressure may be applied, or defoaming may be performed at a temperature higher than a melting temperature of the raw materials. In addition, $SO_3$ or $SnO_2$ can be used as a refining agent. As a $SO_3$ source, a sulfate of at least one element selected from Al, Na, K, Mg, Ca, Sr, and Ba is preferred, and a sulfate of an alkaline earth metal is more preferred, and among these, $CaSO_4 \cdot 2H_2O$, $SrSO_4$, and $BaSO_4$ are particularly preferred since an action of enlarging bubbles is remarkable.

As the refining agent used in the defoaming method under a reduced pressure, it is preferable to use a halogen such as Cl or F. As a Cl source, a chloride of at least one element selected from Al, Mg, Ca, Sr, and Ba is preferred, a chloride of an alkaline earth metal is more preferred, and among these, $SrCl_2 \cdot 6H_2O$ and $BaCl_2 \cdot 2H_2O$ are still more preferred since the action of enlarging bubbles is remarkable and deliquescence is low. As a F source, a fluoride of at least one element selected from Al, Na, K, Mg, Ca, Sr, and Ba is preferred, a fluoride of an alkaline earth metal is more preferred, and among these, $CaF_2$ is still more preferred since an action of increasing the meltability of the glass raw material is remarkable.

A tin compound represented by $SnO_2$ generates an $O_2$ gas in a glass melt. In the glass melt, $SnO_2$ is reduced to SnO at a temperature of 1450°C or higher to generate the $O_2$ gas, thereby having an effect of growing bubbles largely. In the production of the glass sheet, since the glass raw material is heated to about 1450°C to 1750°C and melted, bubbles in the glass melt are more effectively enlarged. In the case of using $SnO_2$ as a refining agent, the raw material is preferably prepared to contain the tin compound in an amount of 0.01% or more calculated as $SnO_2$ with respect to 100%, i.e., a total amount of a base composition. The content of $SnO_2$ is preferably 0.01% or more since a refining action during melting of the glass raw material is obtained. The content of $SnO_2$ is more preferably 0.05% or more, and still more preferably 0.1% or more. The content of $SnO_2$ is preferably 0.3% or less since coloring or devitrification of the glass is prevented. The content of the tin compound in the glass is more preferably 0.25% or less, still more preferably 0.2% or less, and even more preferably 0.15% or less calculated as $SnO_2$ with respect to 100%, i.e., the total amount of the glass base composition.

The next forming step is a step of forming the molten glass, whose bubbles have been removed in the above refining step, into a sheet shape to obtain a glass ribbon. As the forming step, a known method of forming the glass into a sheet shape, such as a float method in which a molten glass is flowed over a molten metal such as tin to form into a sheet shape to obtain a glass ribbon, an overflow down-draw method (fusion method) in which a molten glass flows downward from a gutter-shaped member, or a slit down-draw method in which a molten glass is caused to flow downward from a slit, can be applied Among these, the float method or the fusion method is preferred in terms of non-polishing and light polishing

Next, the annealing step is a step of cooling the glass ribbon obtained in the above forming step to room temperature under a controlled cooling condition. In the annealing step, the glass ribbon is cooled, and then annealed to room temperature under a predetermined condition. The annealed glass ribbon is cut to obtain the glass sheet.

When a cooling rate in the annealing step is too high, the strain tends to remain in the cooled glass. In addition, an equivalent cooling rate which is a parameter reflecting a fictive temperature is too high, and as a result, shrinkage of the glass cannot be reduced. Therefore, the R is preferably set such that the equivalent cooling rate is 800°C/min or less. The equivalent cooling rate is more preferably 600°C/min or less, still more preferably 400°C/min or less, even more preferably 300°C/min or less, even still more preferably 200°C/min or less, yet still more preferably 100°C/min or less, yet even more preferably 60°C/min or less, and particularly preferably 40°C/min or less. On the other hand, when the cooling rate is too low, the time required for the step is too long, resulting in low productivity. Therefore, the cooling rate is set to preferably 0.1°C/min or more, more preferably 0.5°C/min or more, and still more preferably 1°C/min or more. The equivalent cooling rate, which is a parameter reflecting a fictive temperature, is set to an equivalent cooling rate based on a refractive index for ease of evaluation

Here, a definition of the equivalent cooling rate based on the refractive index and an evaluation method thereof are as follows. A glass having a target composition is processed into a rectangular body of 10 mm × 10 mm × 0.3 to 2.0 mm to obtain a glass sample. Using an infrared heating type electric furnace, the glass sample is maintained at the strain point + 170°C for 5 minutes, and then the glass sample is cooled to room temperature (25°C). At this time, a plurality of glass samples are produced by changing the condition, i.e., the cooling rate in a range of 1°C/min to 1000°C/min.

Using a precision refractive index measurement device (for example, KPR 3000 manufactured by Shimadzu Device Corporation), a refractive index $n_d$ of a d-line (wavelength: 587.6 nm) of the plurality of glass samples is measured For the measurement, a V-block method or a minimum angle of deviation method may be used. A calibration curve of $n_d$ against the cooling rate is obtained by plotting the obtained $n_d$ against a logarithm of the cooling rate.

Next, the $n_d$ of glasses having the same composition which are actually produced through steps such as melting, forming, and cooling is measured by the above measurement method A corresponding cooling rate (referred to as the equivalent cooling rate in the present embodiment) corresponding to the obtained $n_d$ is determined based on the above calibration curve.

In the glass sample cooled at a constant rate, the equivalent cooling rate based on the $\tan \delta$ and the equivalent cooling rate based on the refractive index are the same, but in the case where a complex cooling process is performed, there may be a difference between the equivalent cooling rate based on the $\tan \delta$ and the equivalent cooling rate based on the refractive index.

The method for producing a glass sheet according to the present invention is not limited to the above. For example, in the case of producing the glass sheet according to the present invention, the glass may be formed into a sheet shape by a press forming method of directly forming the molten glass into a sheet shape.

In the case of producing the glass sheet according to the present invention, in addition to a production method using a melting tank made of a refractory, a crucible made of platinum or an alloy containing platinum as a main component (hereinafter, referred to as a platinum crucible) may be used in a melting tank or a refining tank. In the case of using the platinum crucible, in the melting step, raw materials are prepared to have a composition of a glass sheet to be obtained, and the platinum crucible containing the raw materials is heated in an electric furnace, preferably heated to about 1450°C to 1700°C. A platinum stirrer is inserted and stirring is performed for 1 to 3 hours to obtain a molten glass.

In the forming step in a production process for the glass sheet using a platinum crucible, the molten glass is poured onto, for example, a carbon sheet or into a forming frame to form a sheet shape or a block shape. In the annealing step, the temperature is typically maintained at about $T_g+100°C$, then cooled to around the strain point at a rate of about 1 °C/min to 10°C/min, and then cooled to room temperature at a cooling rate at which the strain does not remain. After cutting into a predetermined shape and polishing, the glass sheet is obtained. The glass sheet obtained by cutting may be heated, for example, to about $T_g+100°C$, and then annealed to room temperature at a predetermined cooling rate. In this way, the equivalent cooling rate of the glass can be adjusted.

The circuit substrate 1 including the glass sheet according to the present invention as the glass substrate 2 is suitable for a high frequency device that copes with a high frequency signal, particularly, a high frequency signal at a frequency of more than 30 GHz, and further a high frequency signal at a frequency of 35 GHz or more. By reducing the transmission loss of such high frequency signals, it is possible to improve properties such as a quality and intensity of the high frequency signals. The circuit substrate 1 including the glass sheet according to the present invention as the glass substrate 2 is suitable for a high frequency device (electronic device) such as a semiconductor device for use in a communication device such as a mobile phone, a smartphone, a portable information terminal, or a Wi-Fi device, a surface acoustic wave (SAW) device, a radar component such as a radar transceiver, an antenna component such as a liquid crystal antenna or a panel antenna, and the like.

That is, the present invention relates not only to a glass substrate for a high frequency device containing the glass according to the present invention, but also to a panel antenna containing the glass according to the present invention.

The glass according to the present invention can also be suitably applied to other products for the purpose of reducing the transmission loss of the high frequency signal. That is, the present invention also relates to a window glass, a vehicular window glass, and a cover glass for a touch panel containing the glass according to the present invention.

The glass sheet containing the glass according to the present invention can stably transmit and receive radio waves in a high frequency band, and is less likely to be damaged or broken, and is thus also suitable for a window glass, a vehicular window glass, and a cover glass for a touch panel. As the vehicular window glass, for example, a vehicular window glass for automatic driving is more preferred.

EXAMPLES

Hereinafter, the present invention will be described with reference to Examples, but the present invention is not limited to these Examples In the following, Examples 1 to 30, Examples 37 to 46, and Examples 52 to 78 are Inventive Examples, Examples 31 to 33 are Reference Examples, and Examples 34 to 36 and Examples 47 to 51 are Comparative Examples

Glass sheets each having a composition (in mol% based on oxides) shown in any one of Examples 1 to 78, a thickness of 1.0 mm, a shape of 50 mm × 50 mm, and an arithmetic mean roughness Ra on a main surface of 1.0 nm were prepared Each of the glass sheets was produced by a melting method using a platinum crucible Raw materials such as silica sand were mixed to obtain glasses each having the composition shown in any one of Examples 1 to 78, and a batch of 1 kg was prepared. The raw materials were charged into the platinum crucible and melted by being heated at a temperature of 1650°C for 3 hours in an electric furnace to obtain a molten glass. In the melting, a platinum stirrer was inserted into the platinum crucible and stirring was performed for 1 hour to homogenize the glass. The molten glass was poured onto a carbon sheet and formed into a sheet, and then the sheet-shaped glass was charged into an electric furnace at a temperature of about $T_g$+50°C and maintained for 1 hour. The electric furnace was cooled to $T_g$-150°C at a cooling rate of 1°C/min, and then the glass was allowed to cool to room temperature Thereafter, the glass was cut and polished into a sheet shape to obtain a glass sheet.

In each of Examples 37 to 51, the glass sheet obtained by cutting was heated to $T_g$+100°C and maintained for 5 minutes, then the electric furnace was cooled to $T_g$-150°C at a constant cooling rate, and the glass was then allowed to cool to room temperature, to obtain a glass substrate having a controlled equivalent cooling rate.

For each of the glass sheets in Examples 1 to 78, the content of three-coordinated boron, the average thermal expansion coefficient at 50°C to 350°C, the density, the $T_g$, the Young's modulus, the specific elastic modulus, the temperature $T_2$, the temperature $T_4$, the relative dielectric constant at a frequency of 10 GHz or 35 GHz, the dielectric loss tangent at a frequency of 10 GHz or 35 GHz, the tan $\delta_{100}$ - tan $\delta_{10}$, the tan $\delta_{100}$ - tan $\delta_A$, the surface devitrification temperature, the elution amount of the glass component per unit surface area when immersed in a 45°C aqueous solution containing 6 mass% of $HNO_3$ and 5 mass% of $H_2SO_4$ for 170 seconds (6% $HNO_3$ + 5% $H_2SO_4$ at 45°C × 170 sec) as acid resistance evaluation, the transmittance after a heat treatment, the β-OH and the Δβ-OP are shown in Tables 1 to 15. Values shown in parentheses in the tables mean calculated values or estimated values, and blank columns mean unmeasured values

Methods for measuring the physical properties are shown below.

$$(B^{[3]}/(B^{[3]}+B^{[4]}))$$

The amounts of three-coordinated boron and four-coordinated boron in the glass were measured under the following conditions by a single pulse method using ECZ700 manufactured by JEOL Ltd.

Probe: 3.2 mm for solid
Rotation number: 15 kHz
Flip angle: 30°
Pulse repetition delay: 16 seconds

Standard sample: adamantane

As the measurement result, phase correction was performed using NMR software Delta manufactured by JEOL Ltd., then peaks derived from three-coordinated boron and four-coordinated boron were separated, and an abundance ratio of three-coordinated boron ($B^{[3]}/(B^{[3]}+B^{[4]})$) was calculated based on the corresponding peak area ratio.

($B^{[3]}$ (calculated as $B_2O_3$))

A proportion (mol%) of three-coordinated boron contained in the glass, calculated as $B_2O_3$, was calculated based on the total amount of $B_2O_3$ and the abundance ratios of three-coordinated boron and four-coordinated boron according to the following equation.

$$B^{[3]} \text{ (calculated as } B_2O_3) = [B_2O_3] \times (B^{[3]}/(B^{[3]}+B^{[4]}))$$

(Average Thermal Expansion Coefficient)

The average thermal expansion coefficient was measured using a differential thermal expansion meter according to a method defined in JIS R3102 (1995). A measurement temperature range was 50°C to 350°C, and the unit was $\times 10^{-7}$/°C.

(Density)

The density of about 20 g of bubble-free glass lump was measured by the Archimedes method

($T_g$)

The $T_g$ was measured by a thermal expansion method according to a method defined in JIS R3103-3
(2001).

(Young's Modulus)

The Young's Modulus of a glass having a thickness of 0.5 mm to 10 mm was measured by an ultrasonic pulse method according to a method defined in JIS Z2280 (1993). The unit was GPa.

(Specific Elastic Modulus)

The specific elastic modulus (MN-m/kg) was calculated by dividing the Young's modulus measured by the above method by the density measured by the above method

(Temperature $T_2$)

The viscosity was measured using a rotary viscometer, and the temperature $T_2$ (°C) at which the viscosity was $10^2$ dPa·s was measured according to a method defined in ASTM C 965-96 (2017).

(Temperature $T_4$)

The viscosity was measured using a rotary viscometer, and the temperature $T_4$ (°C) at which the viscosity was $10^4$ dPa·s was measured according to a method defined in ASTM C 965-96 (2017).

(Relative Dielectric Constant and Dielectric Loss Tangent)

The relative dielectric constant and the dielectric loss tangent were measured using a cavity resonator and a vector network analyzer according to a method defined in JIS R1641 (2007). The measurement frequency is 10 GHz or 35 GHz, which is a resonance frequency of air of the cavity resonator

$(\tan \delta_{100} - \tan \delta_{10}$ and $\tan \delta_{100} - \tan \delta_A)$

The dielectric loss tangent of the glass sheet at 10 GHz was measured and taken as the $\tan \delta_A$.

The glass sheet was charged into an infrared heating type electric furnace, heated to $(T_g+100)°C$, maintained for 5 minutes, and then cooled to $(T_g-150)°C$ at a cooling rate of 10°C/min, and then the dielectric loss tangent at 10 GHz was measured and taken as the $\tan \delta_{10}$.

In addition, the glass sheet was charged into an infrared heating type electric furnace, heated to $(T_g+100)°C$, maintained for 5 minutes, and then cooled to $(T_g-150)°C$ at a cooling rate of 100°C/min, and then the dielectric loss tangent at 10 GHz was measured and taken as the $\tan \delta_{100}$.

Based on the obtained values, the $\tan \delta_{100} - \tan \delta_{10}$ and the $\tan \delta_{100} - \tan \delta_A$ were calculated

(Surface Devitrification Temperature)

The glass was pulverized and classified using a test sieve to have a particle diameter in a range of 2 mm to 4 mm. The obtained glass cullet was ultrasonically cleaned in isopropyl alcohol for 5 minutes, cleaned with ion-exchanged water, then dried, charged into a platinum dish, and subjected to a heat treatment for 17 hours in an electric furnace having a controlled constant temperature The temperature in the heat treatment was set at an interval of 10°C.

After the heat treatment, the glass was taken out from the platinum dish, and the maximum temperature at which crystals were precipitated on the surface of the glass and the minimum temperature at which no crystals were precipitated on the surface of the glass were observed by using an optical microscope.

The maximum temperature at which crystals were precipitated on the surface of the glass and the minimum temperature at which no crystals were precipitated on the surface of the glass were each measured once. Note that, in the case where it is difficult to determine the precipitation of the crystals, the measurement may be performed twice.

An average value of measurement values of the maximum temperature at which crystals were precipitated on the surface of the glass and the minimum temperature at which no crystals were precipitated on the surface of the glass was determined as the surface devitrification temperature

(Acid Resistance: 6% $HNO_3$ + 5% $H_2SO_4$ at 45°C $\times$ 170 sec)

The glass sample was immersed in an acid aqueous solution (6 mass% $HNO_3$ + 5 mass% $H_2SO_4$, 45°C) for 170 seconds, and the elution amount $(mg/cm^2)$ of the glass component per unit surface area was evaluated. When the elution amount of the glass component is 0.12 $mg/cm^2$ or less, the acid resistance is good.

(Transmittance after Heat Treatment)

Each glass sheet was heated to the temperature $T_4$ (°C), maintained for 1 minute, and then annealed to $T_g-150°C$ at a cooling rate of 40°C/min. After cooling to room temperature, the glass was mirror-finished on both surfaces, and the parallel light transmittance of the obtained glass sheet was measured at a wavelength of 308 nm. The parallel light transmittance was measured according to JIS-K-7136 (2000) and was determined by subtracting a diffuse transmittance from a total light transmittance

($\beta$-OH)

The $\beta$-OP was determined by mirror-polishing both surfaces of the glass sample to have a sample thickness of 0.7 mm to 2.0 mm, and then measuring the transmittance using FT-IR in a wave number range of 4000 $cm^{-1}$ to 2000 $cm^{-1}$. The transmittance at a wave number of 4000 $cm^{-1}$ was defined as $\tau_1$ (%), a minimum transmittance at a wave numbers of 3700 $cm^{-1}$ to 3500 $cm^{-1}$ was defined as $\tau_2$ (%), and the thickness of the glass sample was defined as X (mm), and the $\beta$-OP value was calculated determined according to the following equation. Note that, unless otherwise specified, the thickness of the glass sample was adjusted such that $\tau_2$ was in the range of 20% to 60%.

$$\beta\text{-OH } (mm^{-1}) = (1/X)\log_{10}(\tau_1/\tau_2)$$

($\Delta\beta$-OH)

The $\beta$-OP of a glass sheet having a thickness of 1.0 mm was measured, and then the glass sheet was left standing at a temperature of 60°C and a relative humidity of 95%. After 90 hours from start of the standing, the $\beta$-OP of the glass sheet was measured A value obtained by subtracting the $\beta$-OP before the standing from the $\beta$-OP after the standing was

calculated as the $\Delta\beta$-OH.

Table 1

| mol% | Example 1 | Example 2 | Example 3 | Example 4 | Example 5 |
|---|---|---|---|---|---|
| $SiO_2$ | 60.5 | 60.4 | 61.4 | 62.5 | 61.9 |
| $Al_2O_3$ | 4.9 | 4.9 | 4.9 | 4.9 | 4.8 |
| $B_2O_3$ | 29.4 | 29.3 | 28.3 | 27.4 | 27.1 |
| MgO | 2.2 | 1.2 | 2.2 | 2.2 | 1.2 |
| CaO | 1.0 | 2.0 | 1.0 | 1.0 | 1.9 |
| SrO | 1.8 | 1.8 | 1.8 | 1.8 | 2.7 |
| BaO | 0.2 | 0.2 | 0.2 | 0.2 | 0.2 |
| $Li_2O$ | 0.13 | 0.18 | 0.16 | 0.10 | 0.07 |
| $Na_2O$ | 0.07 | 0.06 | 0.07 | 0.07 | 0.05 |
| $K_2O$ | 0.01 | 0.01 | 0 | 0.01 | 0 |
| Expression (A) | 5.1 | 5.1 | 5.1 | 5.1 | 6.0 |
| Expression (B) | -0.2 | -0.2 | -0.2 | -0.2 | -1.1 |
| Expression (C) | 89.8 | 89.8 | 89.8 | 89.8 | 89.0 |
| Expression (D) | 0.17 | 0.17 | 0.17 | 0.18 | 0.18 |
| Expression (E) | 0.42 | 0.23 | 0.42 | 0.42 | 0.19 |
| Expression (F) | 1.04 | 1.04 | 1.04 | 1.04 | 1.24 |
| Expression (G) | 0.09 | 0.17 | 0.09 | 0.09 | 0.17 |
| Expression (H) | 31 | 31 | 33 | 35 | 35 |
| Expression (I) | 0.63 | 0.63 | 0.63 | 0.63 | 0.93 |
| Expression (J) | 0.62 | 0.62 | 0.62 | 0.62 | 0.52 |
| Expression (K) | 0.67 | 0.67 | 0.68 | 0.70 | 0.70 |
| Expression (L) | 15.2 | 15.3 | 15.4 | 15.5 | 16.2 |
| Expression (M) | 1.95 | 1.86 | 1.96 | 1.95 | 2.09 |
| Expression (N) | 0.37 | 0.35 | 0.37 | 0.37 | 0.34 |
| Expression (O) | 0.54 | 0.73 | 0.54 | 0.54 | 0.77 |
| Expression (P) | 0.56 | 1.11 | 0.56 | 0.56 | 0.72 |
| Expression (Q) | 0.21 | 0.24 | 0.24 | 0.19 | 0.13 |
| Expression (R) | 0.61 | 0.73 | 0.68 | 0.56 | 0.54 |
| $B^{[3]}/(B^{[3]}+B^{[4]})$ | 0.94 | (0.94) | 0.95 | 0.95 | (0.94) |
| $B^{[3]}$ (calculated as $B_2O_3$) | 27.4 | (27.7) | 27.0 | 25.9 | (25.6) |
| Average thermal expansion coefficient ($\times 10^{-7}$/K) | (33.2) | (34.0) | (32.8) | (32.4) | (34.6) |
| Density (g/cm$^3$) | (2.20) | (2.20) | (2.20) | (2.21) | (2.24) |
| $T_g$ (°C) | (565) | (564) | (572) | (579) | (577) |
| Young's modulus (GPa) | (50) | (50) | (51) | (52) | (52) |
| Specific elastic modulus (MN·m/kg) | (23) | (23) | (23) | (24) | (23) |
| Temperature $T_2$ (°C) | (1646) | (1648) | (1664) | (1683) | (1669) |
| Temperature $T_4$ (°C) | (1215) | (1214) | (1230) | (1245) | (1229) |
| Relative dielectric constant at 10 GHz | 4.2 | (4.1) | 4.2 | 4.2 | 4.3 |

(continued)

| mol% | Example 1 | Example 2 | Example 3 | Example 4 | Example 5 |
|---|---|---|---|---|---|
| Relative dielectric constant at 35 GHz | (4.1) | (4.1) | (4.1) | (4.1) | (4.3) |
| Dielectric loss tangent at 10 GHz | 0.0012 | (0.0012) | 0.0012 | 0.0013 | 0.0014 |
| Dielectric loss tangent at 35 GHz | (0.0018) | (0.0018) | (0.0018) | (0.0019) | (0.0023) |
| $\tan \delta_{100}$ - $\tan \delta_{10}$ | (0.0002) | (0.0002) | (0.0002) | (0.0003) | (0.0003) |
| Surface devitrification temperature (°C) | < 1200 | < 1200 | < 1200 | < 1200 | < 1200 |
| Acid resistance (mg/cm$^2$) | 0.04 | (0.06) | 0.04 | 0.03 | 0.09 |
| Transmittance (%) after heat treatment | 56 | (> 50) | 61 | 66 | 61 |
| β-OP (mm$^{-1}$) | 0.58 | 0.69 | 0.75 | 0.72 | 0.19 |
| Δβ-OP (mm$^{-1}$) | 0.06 | (0.03) | 0.04 | 0.05 | 0.03 |

In the tables, the expression (A) to the expression (R) respectively mean the following

Expression (A): $[MgO]+[CaO]+[SrO]+[BaO]$

Expression (B): $[Al_2O_3]-([MgO]+[CaO]+[SrO]+[BaO])$

Expression (C): $[SiO_2]+[B_2O_3]$

Expression (D): $[Al_2O_3]/[B_2O_3]$

Expression (E): $[MgO]/([MgO]+[CaO]+[SrO]+[BaO])$

Expression (F): $([MgO]+[CaO]+[SrO]+[BaO])/[Al_2O_3]$

Expression (G): $[BaO]/[MgO]$

Expression (H): $[SiO_2]-[B_2O_3]$

Expression (I): $([SrO]+[BaO])/([MgO]+[CaO])$

Expression (J): $([MgO]+[CaO])/([MgO]+[CaO]+[SrO]+[BaO])$

Expression (K): $[SiO_2]/([SiO_2]+[B_2O_3])$

Expression (L): $119-(106\times[SiO_2]+60\times[Al_2O_3]+119\times[B_2O_3]+37\times[MgO]+32\times[CaO]+32\times[SrO]+33\times[BaO]+36\times[Li_2O]+20\times[Na_2O]+13\times[K_2O])$

Expression (M): $0.46\times[MgO]+0.36\times[CaO]+0.29\times[SrO]+0.26\times[BaO]$

Expression (N): $(0.46\times[MgO]+0.36\times[CaO]+0.29\times[SrO]+0.26\times[BaO])/([MgO]+[CaO]+[SrO]+[BaO])$

Expression (O): $([CaO]+[SrO])/([MgO]+[CaO]+[SrO]+[BaO])$

Expression (P): $[CaO]/[SrO]$

Expression (Q): $[Li_2O]+[Na_2O]+[K_2O]$

Expression (R): $[Li_2O]/([Li_2O]+[Na_2O]+[K_2O])$

Table 2

| mol% | Example 6 | Example 7 | Example 8 | Example 9 | Example 10 |
|---|---|---|---|---|---|
| $SiO_2$ | 62.9 | 59.4 | 61.8 | 59.9 | 62.0 |
| $Al_2O_3$ | 4.8 | 5.8 | 4.9 | 6.0 | 4.9 |
| $B_2O_3$ | 26.1 | 28.8 | 27.9 | 28.0 | 28.0 |
| MgO | 1.2 | 3.1 | 2.2 | 3.0 | 2.2 |
| CaO | 1.9 | 1.9 | 1.0 | 2.0 | 1.2 |
| SrO | 2.7 | 0.8 | 1.8 | 1.0 | 1.8 |
| BaO | 0.2 | 0.2 | 0.2 | 0 | 0 |
| $Li_2O$ | 0.14 | 0 | 0.20 | 0.08 | 0.01 |
| $Na_2O$ | 0.03 | 0.04 | 0.05 | 0.08 | 0.05 |
| $K_2O$ | 0 | 0 | 0.01 | 0 | 0.01 |
| Expression (A) | 6.0 | 6.0 | 5.1 | 6.0 | 5.1 |
| Expression (B) | -1.1 | -0.2 | -0.2 | 0.0 | -0.2 |
| Expression (C) | 89.0 | 88.2 | 89.8 | 87.9 | 90.0 |
| Expression (D) | 0.19 | 0.20 | 0.17 | 0.21 | 0.17 |
| Expression (E) | 0.19 | 0.52 | 0.42 | 0.50 | 0.42 |
| Expression (F) | 1.24 | 1.03 | 1.04 | 1.00 | 1.04 |
| Expression (G) | 0.17 | 0.06 | 0.09 | 0.00 | 0.00 |
| Expression (H) | 37 | 31 | 34 | 32 | 34 |
| Expression (I) | 0.93 | 0.19 | 0.63 | 0.20 | 0.53 |
| Expression (J) | 0.52 | 0.84 | 0.62 | 0.83 | 0.65 |
| Expression (K) | 0.71 | 0.67 | 0.69 | 0.68 | 0.69 |
| Expression (L) | 16.3 | 16.2 | 15.5 | 16.5 | 15.3 |
| Expression (M) | 2.11 | 2.39 | 1.97 | 2.42 | 1.94 |
| Expression (N) | 0.34 | 0.40 | 0.37 | 0.39 | 0.38 |
| Expression (O) | 0.77 | 0.45 | 0.54 | 0.50 | 0.58 |
| Expression (P) | 0.72 | 2.50 | 0.56 | 2.00 | 0.67 |
| Expression (Q) | 0.17 | 0.04 | 0.26 | 0.16 | 0.07 |
| Expression (R) | 0.80 | 0.00 | 0.77 | 0.50 | 0.15 |
| $B^{[3]}/(B^{[3]}+B^{[4]})$ | (0.94) | (0.95) | (0.95) | (0.95) | (0.95) |
| $B^{[3]}$ (calculated as $B_2O_3$) | (24.7) | (27.3) | (26.4) | (26.5) | (26.5) |
| Average thermal expansion coefficient ($\times 10^{-7}$/K) | (34.2) | (33.4) | (32.6) | (33.1) | (32.6) |
| Density (g/$cm^3$) | (2.24) | (2.20) | (2.20) | (2.21) | (2.20) |
| $T_g$ (°C) | (583) | (574) | (575) | (581) | (576) |
| Young's modulus (GPa) | (53) | (52) | (51) | (53) | (52) |
| Specific elastic modulus (MN·m/kg) | (24) | (24) | (23) | (24) | (23) |
| Temperature $T_2$ (°C) | (1687) | (1612) | (1672) | (1621) | (1671) |
| Temperature $T_4$ (°C) | (1244) | (1198) | (1236) | (1207) | (1235) |
| Relative dielectric constant at 10 GHz | 4.3 | 4.2 | 4.2 | (4.2) | (4.1) |
| Relative dielectric constant at 35 GHz | (4.3) | (4.2) | (4.1) | (4.2) | (4.1) |

(continued)

| mol% | Example 6 | Example 7 | Example 8 | Example 9 | Example 10 |
|---|---|---|---|---|---|
| Dielectric loss tangent at 10 GHz | 0.0014 | 0.0014 | 0.0012 | (0.0015) | (0.0012) |
| Dielectric loss tangent at 35 GHz | (0.0023) | (0.0021) | (0.0018) | (0.0022) | (0.0018) |
| $\tan \delta_{100}$ - $\tan \delta_{10}$ | (0.0003) | (0.0003) | (0.0002) | (0.0003) | (0.0002) |
| Surface devitrification temperature (°C) | < 1200 | < 1200 | < 1200 | < 1200 | < 1200 |
| Acid resistance (mg/cm$^2$) | 0.08 | 0.03 | 0.04 | (0.02) | (0.04) |
| Transmittance (%) after heat treatment | 65 | 2 | 62 | (10) | (> 50) |
| $\beta$-OP (mm$^{-1}$) | 0.45 | 0.55 | 0.51 | 0.47 | 0.52 |
| $\Delta\beta$-OP (mm$^{-1}$) | 0.03 | 0.08 | 0.07 | (0.04) | (0.05) |

Table 3

| mol% | Example 11 | Example 12 | Example 13 | Example 14 | Example 15 |
|---|---|---|---|---|---|
| $SiO_2$ | 61.8 | 61.9 | 61.8 | 60.9 | 58.5 |
| $Al_2O_3$ | 5.0 | 4.9 | 6.0 | 5.0 | 5.0 |
| $B_2O_3$ | 27.9 | 28.0 | 25.9 | 27.9 | 30.3 |
| MgO | 1.7 | 2.2 | 2.0 | 1.0 | 1.0 |
| CaO | 1.7 | 1.0 | 2.0 | 2.0 | 2.0 |
| SrO | 1.7 | 2.0 | 2.0 | 2.0 | 2.9 |
| BaO | 0 | 0 | 0 | 1.0 | 0 |
| $Li_2O$ | 0.17 | 0.11 | 0.17 | 0.10 | 0.13 |
| $Na_2O$ | 0.07 | 0.07 | 0.07 | 0.08 | 0.04 |
| $K_2O$ | 0.01 | 0 | 0 | 0 | 0 |
| Expression (A) | 5.0 | 5.1 | 6.0 | 6.0 | 6.0 |
| Expression (B) | 0.0 | -0.2 | 0.0 | -1.0 | -0.9 |
| Expression (C) | 89.8 | 89.8 | 87.8 | 88.8 | 88.8 |
| Expression (D) | 0.18 | 0.17 | 0.23 | 0.18 | 0.17 |
| Expression (E) | 0.33 | 0.42 | 0.33 | 0.17 | 0.17 |
| Expression (F) | 1.00 | 1.04 | 1.00 | 1.20 | 1.18 |
| Expression (G) | 0.00 | 0.00 | 0.00 | 1.00 | 0.00 |
| Expression (H) | 34 | 34 | 36 | 33 | 28 |
| Expression (I) | 0.50 | 0.63 | 0.50 | 1.00 | 0.97 |
| Expression (J) | 0.67 | 0.62 | 0.67 | 0.50 | 0.51 |
| Expression (K) | 0.69 | 0.69 | 0.70 | 0.69 | 0.66 |
| Expression (L) | 15.5 | 15.4 | 16.9 | 16.2 | 15.9 |
| Expression (M) | 1.90 | 1.95 | 2.27 | 2.06 | 2.08 |
| Expression (N) | 0.36 | 0.37 | 0.36 | 0.33 | 0.34 |
| Expression (O) | 0.67 | 0.58 | 0.67 | 0.67 | 0.83 |
| Expression (P) | 1.01 | 0.50 | 1.00 | 1.00 | 0.69 |
| Expression (Q) | 0.25 | 0.18 | 0.25 | 0.18 | 0.17 |
| Expression (R) | 0.69 | 0.60 | 0.71 | 0.55 | 0.77 |

(continued)

| mol% | Example 11 | Example 12 | Example 13 | Example 14 | Example 15 |
|---|---|---|---|---|---|
| $B^{[3]}/(B^{[3]}+B^{[4]})$ | (0.95) | (0.95) | (0.95) | (0.94) | (0.94) |
| $B^{[3]}$ (calculated as $B_2O_3$) | (26.4) | (26.4) | (24.5) | (26.4) | (28.6) |
| Average thermal expansion coefficient ($\times 10^{-7}$/K) | (32.8) | (32.6) | (33.2) | (35.3) | (36.0) |
| Density (g/cm$^3$) | (2.20) | (2.19) | (2.23) | (2.25) | (2.22) |
| $T_g$ (°C) | (576) | (576) | (593) | (569) | (556) |
| Young's modulus (GPa) | (51) | (51) | (54) | (52) | (50) |
| Specific elastic modulus (MN·m/kg) | (23) | (23) | (24) | (23) | (23) |
| Temperature $T_2$ (°C) | (1673) | (1672) | (1661) | (1652) | (1604) |
| Temperature $T_4$ (°C) | (1236) | (1236) | (1235) | (1218) | (1178) |
| Relative dielectric constant at 10 GHz | (4.1) | (4.1) | (4.2) | (4.3) | (4.2) |
| Relative dielectric constant at 35 GHz | (4.1) | (4.1) | (4.3) | (4.3) | (4.2) |
| Dielectric loss tangent at 10 GHz | (0.0012) | (0.0012) | (0.0017) | (0.0016) | (0.0014) |
| Dielectric loss tangent at 35 GHz | (0.0018) | (0.0018) | (0.0024) | (0.0023) | (0.0021) |
| $\tan \delta_{100}$ - $\tan \delta_{10}$ | (0.0002) | (0.0002) | (0.0003) | (0.0003) | (0.0003) |
| Surface devitrification temperature (°C) | < 1200 | < 1200 | < 1200 | < 1200 | < 1200 |
| Acid resistance (mg/cm$^2$) | (0.04) | (0.03) | (0.05) | (0.08) | (0.08) |
| Transmittance (%) after heat treatment | (> 50) | (> 50) | (> 50) | (> 50) | (5) |
| β-OP (mm$^{-1}$) | 0.49 | 0.72 | 0.63 | 0.75 | 0.40 |
| Δβ-OP (mm$^{-1}$) | (0.05) | (0.06) | (0.01) | (0.08) | (0.04) |

Table 4

| mol% | Example 16 | Example 17 | Example 18 | Example 19 | Example 20 |
|---|---|---|---|---|---|
| $SiO_2$ | 59.9 | 59.6 | 60.2 | 62.6 | 62.9 |
| $Al_2O_3$ | 5.0 | 5.9 | 5.6 | 4.9 | 5.5 |
| $B_2O_3$ | 28.9 | 28.6 | 28.1 | 26.9 | 26.5 |
| MgO | 1.0 | 2.2 | 1.5 | 2.5 | 2.4 |
| CaO | 0.5 | 2.4 | 3.0 | 1.6 | 1.5 |
| SrO | 4.5 | 0.6 | 1.0 | 1.0 | 1.0 |
| BaO | 0 | 0.5 | 0.5 | 0.3 | 0 |
| $Li_2O$ | 0.10 | 0.17 | 0.11 | 0.16 | 0.16 |
| $Na_2O$ | 0.08 | 0.07 | 0.04 | 0.07 | 0.07 |
| $K_2O$ | 0.01 | 0 | 0 | 0 | 0 |
| Expression (A) | 6.0 | 5.7 | 6.0 | 5.4 | 4.9 |
| Expression (B) | -1.0 | 0.2 | -0.4 | -0.5 | 0.6 |
| Expression (C) | 88.8 | 88.2 | 88.3 | 89.5 | 89.4 |
| Expression (D) | 0.17 | 0.21 | 0.20 | 0.18 | 0.21 |
| Expression (E) | 0.17 | 0.39 | 0.25 | 0.46 | 0.49 |
| Expression (F) | 1.20 | 0.97 | 1.07 | 1.10 | 0.89 |

(continued)

| mol% | Example 16 | Example 17 | Example 18 | Example 19 | Example 20 |
|---|---|---|---|---|---|
| Expression (G) | 0.00 | 0.23 | 0.33 | 0.12 | 0.00 |
| Expression (H) | 31 | 31 | 32 | 36 | 36 |
| Expression (I) | 3.00 | 0.24 | 0.33 | 0.32 | 0.26 |
| Expression (J) | 0.25 | 0.81 | 0.75 | 0.76 | 0.80 |
| Expression (K) | 0.67 | 0.68 | 0.68 | 0.70 | 0.70 |
| Expression (L) | 16.1 | 16.3 | 16.4 | 15.8 | 15.8 |
| Expression (M) | 1.98 | 2.23 | 2.22 | 2.14 | 1.99 |
| Expression (N) | 0.32 | 0.38 | 0.36 | 0.38 | 0.39 |
| Expression (O) | 0.83 | 0.53 | 0.67 | 0.48 | 0.51 |
| Expression (P) | 0.11 | 4.00 | 3.00 | 1.60 | 1.50 |
| Expression (Q) | 0.18 | 0.25 | 0.15 | 0.23 | 0.26 |
| Expression (R) | 0.55 | 0.69 | 0.72 | 0.70 | 0.60 |
| $B^{[3]}/(B^{[3]}+B^{[4]})$ | (0.94) | (0.95) | (0.95) | (0.95) | (0.95) |
| $B^{[3]}$ (calculated as $B_2O_3$) | (27.3) | (27.1) | (26.5) | (25.5) | (25.1) |
| Average thermal expansion coefficient ($\times 10^{-7}$/K) | (35.6) | (33.7) | (34.6) | (32.4) | (31.3) |
| Density (g/cm$^3$) | (2.25) | (2.21) | (2.22) | (2.20) | (2.19) |
| $T_g$ (°C) | (564) | (574) | (575) | (582) | (590) |
| Young's modulus (GPa) | (51) | (52) | (52) | (52) | (53) |
| Specific elastic modulus (MN·m/kg) | (23) | (24) | (24) | (24) | (24) |
| Temperature $T_2$ (°C) | (1631) | (1621) | (1634) | (1683) | (1690) |
| Temperature $T_4$ (°C) | (1198) | (1204) | (1210) | (1246) | (1256) |
| Relative dielectric constant at 10 GHz | (4.3) | (4.2) | (4.2) | (4.1) | (4.1) |
| Relative dielectric constant at 35 GHz | (4.3) | (4.2) | (4.3) | (4.1) | (4.1) |
| Dielectric loss tangent at 10 GHz | (0.0016) | (0.0014) | (0.0015) | (0.0014) | (0.0013) |
| Dielectric loss tangent at 35 GHz | (0.0023) | (0.0021) | (0.0022) | (0.0019) | (0.0019) |
| $\tan \delta_{100} - \tan \delta_{10}$ | (0.0003) | (0.0003) | (0.0003) | (0.0003) | (0.0002) |
| Surface devitrification temperature (°C) | < 1200 | < 1200 | < 1200 | < 1200 | < 1200 |
| Acid resistance (mg/cm$^2$) | (0.10) | (0.03) | (0.05) | (0.03) | (0.02) |
| Transmittance (%) after heat treatment | (10) | (5) | (10) | (> 50) | (5) |
| β-OP (mm$^{-1}$) | 0.66 | 0.71 | 0.42 | 0.49 | 0.75 |
| Δβ-OP (mm$^{-1}$) | (0.04) | (0.08) | (0.05) | (0.05) | (0.05) |

Table 5

| mol% | Example 21 | Example 22 | Example 23 | Example 24 | Example 25 |
|---|---|---|---|---|---|
| $SiO_2$ | 73.8 | 70.8 | 70.3 | 69.3 | 68.4 |
| $Al_2O_3$ | 4.8 | 5.8 | 5.0 | 4.7 | 4.4 |
| $B_2O_3$ | 18.0 | 19.0 | 20.0 | 20.9 | 21.5 |
| MgO | 1.0 | 1.5 | 1.2 | 1.8 | 1.4 |

(continued)

| mol% | Example 21 | Example 22 | Example 23 | Example 24 | Example 25 |
|---|---|---|---|---|---|
| CaO | 1.2 | 1.0 | 0.8 | 1.2 | 1.4 |
| SrO | 1.0 | 1.2 | 1.5 | 1.6 | 1.7 |
| BaO | 0 | 0.5 | 1.0 | 0.2 | 1.1 |
| $Li_2O$ | 0.17 | 0.16 | 0.17 | 0.16 | 0.11 |
| $Na_2O$ | 0.08 | 0.07 | 0.06 | 0.07 | 0.04 |
| $K_2O$ | 0 | 0 | 0 | 0.01 | 0.01 |
| Expression (A) | 3.2 | 4.2 | 4.5 | 4.8 | 5.6 |
| Expression (B) | 1.6 | 1.6 | 0.5 | -0.1 | -1.2 |
| Expression (C) | 91.8 | 89.8 | 90.3 | 90.3 | 89.9 |
| Expression (D) | 0.27 | 0.31 | 0.25 | 0.22 | 0.20 |
| Expression (E) | 0.31 | 0.36 | 0.27 | 0.38 | 0.25 |
| Expression (F) | 0.67 | 0.72 | 0.90 | 1.02 | 1.27 |
| Expression (G) | 0.00 | 0.33 | 0.83 | 0.11 | 0.79 |
| Expression (H) | 56 | 52 | 50 | 48 | 47 |
| Expression (I) | 0.45 | 0.68 | 1.25 | 0.60 | 1.00 |
| Expression (J) | 0.69 | 0.60 | 0.44 | 0.63 | 0.50 |
| Expression (K) | 0.80 | 0.79 | 0.78 | 0.77 | 0.76 |
| Expression (L) | 15.4 | 16.4 | 16.1 | 16.1 | 16.4 |
| Expression (M) | 1.24 | 1.58 | 1.59 | 1.83 | 1.96 |
| Expression (N) | 0.36 | 0.36 | 0.34 | 0.36 | 0.34 |
| Expression (O) | 0.69 | 0.52 | 0.51 | 0.58 | 0.55 |
| Expression (P) | 1.20 | 0.83 | 0.53 | 0.75 | 0.82 |
| Expression (Q) | 0.25 | 0.23 | 0.24 | 0.24 | 0.16 |
| Expression (R) | 0.68 | 0.68 | 0.73 | 0.67 | 0.72 |
| $B^{[3]}/(B^{[3]}+B^{[4]})$ | (0.94) | (0.94) | (0.94) | (0.95) | (0.94) |
| $B^{[3]}$ (calculated as $B_2O_3$) | (17.0) | (17.9) | (18.8) | (19.8) | (20.3) |
| Average thermal expansion coefficient ($\times 10^{-7}$/K) | (26.5) | (28.1) | (29.5) | (29.7) | (31.8) |
| Density (g/$cm^3$) | (2.20) | (2.24) | (2.25) | (2.23) | (2.26) |
| $T_g$ (°C) | (648) | (643) | (629) | (623) | (613) |
| Young's modulus (GPa) | (57) | (57) | (56) | (56) | (55) |
| Specific elastic modulus (MN·m/kg) | (26) | (26) | (25) | (25) | (24) |
| Temperature $T_2$ (°C) | (1911) | (1844) | (1839) | (1817) | (1798) |
| Temperature $T_4$ (°C) | (1424) | (1379) | (1368) | (1349) | (1330) |
| Relative dielectric constant at 10 GHz | (4.0) | (4.2) | (4.2) | (4.1) | (4.3) |
| Relative dielectric constant at 35 GHz | (4.1) | (4.2) | (4.2) | (4.2) | (4.3) |
| Dielectric loss tangent at 10 GHz | (0.0013) | (0.0016) | (0.0017) | (0.0016) | (0.0018) |
| Dielectric loss tangent at 35 GHz | (0.0018) | (0.0022) | (0.0022) | (0.0021) | (0.0024) |
| $\tan \delta_{100}$ - $\tan \delta_{10}$ | (0.0003) | (0.0003) | (0.0003) | (0.0003) | (0.0003) |
| Surface devitrification temperature (°C) | < 1200 | < 1200 | < 1200 | < 1200 | < 1200 |

(continued)

| mol% | Example 21 | Example 22 | Example 23 | Example 24 | Example 25 |
|---|---|---|---|---|---|
| Acid resistance (mg/cm$^2$) | (0.04) | (0.05) | (0.07) | (0.05) | (0.08) |
| Transmittance (%) after heat treatment | (> 50) | (> 50) | (> 50) | (> 50) | (> 50) |
| β-OP (mm$^{-1}$) | 0.67 | 0.41 | 0.70 | 0.63 | 0.40 |
| Δβ-OH (mm$^{-1}$) | (0.00) | (0.03) | (0.05) | (0.00) | (0.03) |

Table 6

| mol% | Example 26 | Example 27 | Example 28 | Example 29 | Example 30 |
|---|---|---|---|---|---|
| SiO$_2$ | 67.4 | 66.4 | 65.4 | 64.4 | 63.8 |
| Al$_2$O$_3$ | 5.1 | 5.4 | 5.5 | 5.7 | 4.5 |
| B$_2$O$_3$ | 22.0 | 22.5 | 23.6 | 24.1 | 27.0 |
| MgO | 1.9 | 2.1 | 2.0 | 1.9 | 1.7 |
| CaO | 1.7 | 1.7 | 1.6 | 1.7 | 1.2 |
| SrO | 1.8 | 1.6 | 1.1 | 1.7 | 1.2 |
| BaO | 0 | 0.2 | 0.5 | 0.4 | 0.5 |
| Li$_2$O | 0.09 | 0.16 | 0.20 | 0.07 | 0.09 |
| Na$_2$O | 0.05 | 0.04 | 0.06 | 0.06 | 0.07 |
| K$_2$O | 0.01 | 0.01 | 0 | 0.01 | 0 |
| Expression (A) | 5.4 | 5.6 | 5.2 | 5.7 | 4.6 |
| Expression (B) | -0.3 | -0.2 | 0.3 | 0.0 | -0.1 |
| Expression (C) | 89.4 | 88.8 | 89.1 | 88.5 | 90.8 |
| Expression (D) | 0.23 | 0.24 | 0.23 | 0.24 | 0.17 |
| Expression (E) | 0.35 | 0.38 | 0.38 | 0.33 | 0.37 |
| Expression (F) | 1.06 | 1.04 | 0.95 | 1.00 | 1.02 |
| Expression (G) | 0.00 | 0.10 | 0.25 | 0.21 | 0.29 |
| Expression (H) | 45 | 44 | 42 | 40 | 37 |
| Expression (I) | 0.50 | 0.47 | 0.44 | 0.58 | 0.59 |
| Expression (J) | 0.67 | 0.68 | 0.69 | 0.63 | 0.63 |
| Expression (K) | 0.75 | 0.75 | 0.73 | 0.73 | 0.70 |
| Expression (L) | 16.5 | 16.7 | 16.4 | 16.7 | 15.0 |
| Expression (M) | 2.04 | 2.14 | 2.00 | 2.11 | 1.73 |
| Expression (N) | 0.37 | 0.37 | 0.37 | 0.36 | 0.36 |
| Expression (O) | 0.65 | 0.59 | 0.52 | 0.60 | 0.52 |
| Expression (P) | 0.94 | 1.06 | 1.45 | 1.00 | 1.00 |
| Expression (Q) | 0.15 | 0.21 | 0.26 | 0.14 | 0.16 |
| Expression (R) | 0.63 | 0.77 | 0.76 | 0.49 | 0.55 |
| B[3]/(B[3]+B[4]) | (0.95) | (0.95) | (0.95) | (0.95) | (0.95) |
| B[3] (calculated as B$_2$O$_3$) | (20.8) | (21.2) | (22.4) | (22.7) | (25.5) |
| Average thermal expansion coefficient ($\times$ 10$^{-7}$/K) | (30.8) | (31.2) | (31.2) | (32.2) | (31.9) |

(continued)

| mol% | Example 26 | Example 27 | Example 28 | Example 29 | Example 30 |
|---|---|---|---|---|---|
| Density (g/cm$^3$) | (2.23) | (2.23) | (2.23) | (2.24) | (2.20) |
| $T_g$ (°C) | (617) | (615) | (607) | (604) | (580) |
| Young's modulus (GPa) | (56) | (56) | (55) | (55) | (51) |
| Specific elastic modulus (MN·m/kg) | (25) | (25) | (25) | (25) | (23) |
| Temperature $T_2$ (°C) | (1773) | (1751) | (1737) | (1713) | (1715) |
| Temperature $T_4$ (°C) | (1317) | (1303) | (1293) | (1274) | (1266) |
| Relative dielectric constant at 10 GHz | (4.2) | (4.2) | (4.2) | (4.2) | (4.0) |
| Relative dielectric constant at 35 GHz | (4.2) | (4.2) | (4.2) | (4.3) | (4.1) |
| Dielectric loss tangent at 10 GHz | (0.0017) | (0.0017) | (0.0016) | (0.0017) | (0.0012) |
| Dielectric loss tangent at 35 GHz | (0.0023) | (0.0024) | (0.0022) | (0.0024) | (0.0017) |
| $\tan \delta_{100}$ - $\tan \delta_{10}$ | (0.0003) | (0.0003) | (0.0003) | (0.0003) | (0.0002) |
| Surface devitrification temperature (°C) | < 1200 | < 1200 | < 1200 | < 1200 | < 1200 |
| Acid resistance (mg/cm$^2$) | (0.05) | (0.04) | (0.04) | (0.05) | (0.05) |
| Transmittance (%) after heat treatment | (> 50) | (> 50) | (> 50) | (> 50) | (> 50) |
| β-OP (mm$^{-1}$) | 0.75 | 0.56 | 0.67 | 0.47 | 0.55 |
| Δβ-OH (mm$^{-1}$) | (0.00) | (0.00) | (0.04) | (0.02) | (0.08) |

Table 7

| mol% | Example 31 | Example 32 | Example 33 | Example 34 | Example 35 | Example 36 |
|---|---|---|---|---|---|---|
| SiO$_2$ | 61.8 | 61.0 | 61.1 | 60.0 | 60.0 | 66.1 |
| Al$_2$O$_3$ | 4.0 | 4.1 | 4.0 | 0 | 5.0 | 11.3 |
| B$_2$O$_3$ | 30.0 | 29.0 | 29.7 | 33.0 | 28.0 | 7.8 |
| MgO | 3.2 | 4.0 | 4.2 | 1.0 | 2.0 | 5.1 |
| CaO | 0 | 0.9 | 0 | 2.0 | 3.0 | 4.5 |
| SrO | 0.8 | 0.8 | 0.8 | 1.0 | 2.0 | 5.2 |
| BaO | 0.2 | 0.2 | 0 | 0 | 0 | 0 |
| Li$_2$O | 0.05 | 0.30 | 0.07 | 0 | 0 | 0 |
| Na$_2$O | 0.03 | 0.03 | 0.03 | 0.02 | 0.03 | 0.02 |
| K$_2$O | 0 | 0.01 | 0.01 | 0 | 0 | 0 |
| Expression (A) | 4.2 | 5.9 | 5.1 | 4.0 | 7.0 | 14.8 |
| Expression (B) | -0.2 | -1.8 | -1.2 | -4.0 | -2.0 | -3.6 |
| Expression (C) | 91.8 | 90.0 | 90.8 | 93.0 | 88.0 | 73.9 |
| Expression (D) | 0.13 | 0.14 | 0.13 | 0.00 | 0.18 | 1.45 |
| Expression (E) | 0.76 | 0.68 | 0.81 | 0.25 | 0.29 | 0.35 |
| Expression (F) | 1.05 | 1.44 | 1.30 | - | 1.40 | 1.32 |
| Expression (G) | 0.06 | 0.05 | 0.05 | 0.00 | 0.00 | 0.00 |
| Expression (H) | 32 | 32 | 31 | 27 | 32 | 58 |
| Expression (I) | 0.31 | 0.20 | 0.24 | 0.33 | 0.40 | 0.54 |

(continued)

| mol% | Example 31 | Example 32 | Example 33 | Example 34 | Example 35 | Example 36 |
|---|---|---|---|---|---|---|
| Expression (J) | 0.76 | 0.83 | 0.81 | 0.75 | 0.71 | 0.65 |
| Expression (K) | 0.67 | 0.68 | 0.67 | 0.65 | 0.68 | 0.89 |
| Expression (L) | 13.9 | 15.2 | 14.6 | 14.8 | 16.7 | 27.9 |
| Expression (M) | 1.77 | 2.53 | 2.22 | 1.47 | 2.59 | 5.50 |
| Expression (N) | 0.41 | 0.41 | 0.42 | 0.37 | 0.37 | 0.37 |
| Expression (O) | 0.19 | 0.29 | 0.15 | 0.75 | 0.71 | 0.65 |
| Expression (P) | 0.00 | 1.13 | 0.00 | 2.00 | 1.50 | 0.87 |
| Expression (Q) | 0.08 | 0.34 | 0.11 | 0.02 | 0.03 | 0.02 |
| Expression (R) | 0.63 | 0.88 | 0.65 | 0.00 | 0.00 | 0.00 |
| $B^{[3]}/(B^{[3]}+B^{[4]})$ | 0.96 | (0.95) | (0.95) | (0.95) | (0.95) | (0.93) |
| $B^{[3]}$ (calculated as $B_2O_3$) | 28.7 | (27.5) | (28.2) | (31.2) | (26.5) | (7.2) |
| Average thermal expansion coefficient ($\times 10^{-7}$/K) | 30.2 | (32.8) | (31.8) | 35.4 | 32.0 | 38.4 |
| Density (g/cm$^3$) | 2.17 | (2.19) | (2.17) | 2.19 | 2.26 | 2.50 |
| $T_g$ (°C) | 493 | (545) | (562) | 520 | 633 | 710 |
| Young's modulus (GPa) | 49 | (51) | (50) | 44 | 53 | 76 |
| Specific elastic modulus (MN·m/kg) | 23 | (23) | (23) | 20 | 23 | 30 |
| Temperature $T_2$ (°C) | 1733 | (1648) | (1656) | - | 1642 | 1645 |
| Temperature $T_4$ (°C) | 1256 | (1215) | (1221) | - | 1208 | 1275 |
| Relative dielectric constant at 10 GHz | 4.0 | (4.0) | (3.9) | 3.9 | 4.3 | 5.4 |
| Relative dielectric constant at 35 GHz | (4.0) | (4.0) | (3.9) | 3.9 | 4.3 | 5.3 |
| Dielectric loss tangent at 10 GHz | 0.0010 | (0.0014) | (0.0011) | 0.0016 | 0.0016 | 0.0056 |
| Dielectric loss tangent at 35 GHz | (0.0014) | (0.0019) | (0.0015) | 0.0022 | 0.0022 | 0.0070 |
| $\tan \delta_{100}$ - $\tan \delta_{10}$ | (0.0002) | (0.0003) | (0.0002) | (0.0003) | (0.0003) | (0.0007) |
| Surface devitrification temperature (°C) | < 1220 | < 1200 | < 1200 | - | - | 1266 |
| Acid resistance (mg/cm$^2$) | 0.009 | (0.011) | 0.01 | 0.157 | 0.086 | 0.000 |
| Transmittance (%) after heat treatment | 23 | (< 1) | < 1 | (< 1) | (< 1) | (> 50) |
| β-OP (mm$^{-1}$) | 0.60 | 0.50 | 0.76 | 0.30 | 0.44 | 0.30 |
| Δβ-OH (mm$^{-1}$) | 0.12 | (0.13) | 0.08 | (> 0.2) | (> 0.2) | (0.00) |

Table 8

| mol% | Example 37 | Example 38 | Example 39 | Example 40 | Example 41 |
|---|---|---|---|---|---|
| $SiO_2$ | 61.8 | 61.8 | 61.8 | 61.8 | 61.8 |

(continued)

| mol% | Example 37 | Example 38 | Example 39 | Example 40 | Example 41 |
|---|---|---|---|---|---|
| $Al_2O_3$ | 4.9 | 4.9 | 4.9 | 4.9 | 4.9 |
| $B_2O_3$ | 27.9 | 27.9 | 27.9 | 27.9 | 27.9 |
| MgO | 2.2 | 2.2 | 2.2 | 2.2 | 2.2 |
| CaO | 1.0 | 1.0 | 1.0 | 1.0 | 1.0 |
| SrO | 1.8 | 1.8 | 1.8 | 1.8 | 1.8 |
| BaO | 0.2 | 0.2 | 0.2 | 0.2 | 0.2 |
| $Li_2O$ | 0.20 | 0.20 | 0.20 | 0.20 | 0.20 |
| $Na_2O$ | 0.05 | 0.05 | 0.05 | 0.05 | 0.05 |
| $K_2O$ | 0.01 | 0.01 | 0.01 | 0.01 | 0.01 |
| Expression (A) | 5.1 | 5.1 | 5.1 | 5.1 | 5.1 |
| Expression (B) | -0.2 | -0.2 | -0.2 | -0.2 | -0.2 |
| Expression (C) | 89.8 | 89.8 | 89.8 | 89.8 | 89.8 |
| Expression (D) | 0.17 | 0.17 | 0.17 | 0.17 | 0.17 |
| Expression (E) | 0.42 | 0.42 | 0.42 | 0.42 | 0.42 |
| Expression (F) | 1.04 | 1.04 | 1.04 | 1.04 | 1.04 |
| Expression (G) | 0.09 | 0.09 | 0.09 | 0.09 | 0.09 |
| Expression (H) | 34 | 34 | 34 | 34 | 34 |
| Expression (I) | 0.63 | 0.63 | 0.63 | 0.63 | 0.63 |
| Expression (J) | 0.62 | 0.62 | 0.62 | 0.62 | 0.62 |
| Expression (K) | 0.69 | 0.69 | 0.69 | 0.69 | 0.69 |
| Expression (L) | 15.5 | 15.5 | 15.5 | 15.5 | 15.5 |
| Expression (M) | 1.97 | 1.97 | 1.97 | 1.97 | 1.97 |
| Expression (N) | 0.37 | 0.37 | 0.37 | 0.37 | 0.37 |
| Expression (O) | 0.54 | 0.54 | 0.54 | 0.54 | 0.54 |
| Expression (P) | 0.56 | 0.56 | 0.56 | 0.56 | 0.56 |
| Expression (Q) | 0.26 | 0.26 | 0.26 | 0.26 | 0.26 |
| Expression (R) | 0.77 | 0.77 | 0.77 | 0.77 | 0.77 |
| $B^{[3]}/(B^{[3]}+B^{[4]})$ | (0.95) | (0.95) | (0.95) | (0.95) | (0.95) |
| $B^{[3]}$ (calculated as $B_2O_3$) | (26.5) | (26.5) | (26.6) | (26.6) | (26.6) |
| Average thermal expansion coefficient ($\times 10^{-7}$/K) | (32.6) | (32.6) | (32.6) | (32.6) | (32.6) |
| Density (g/cm$^3$) | (2.20) | (2.20) | (2.20) | (2.20) | (2.20) |
| $T_g$ (°C) | (575) | (575) | (575) | (575) | (575) |
| Young's modulus (GPa) | (51) | (51) | (51) | (51) | (51) |
| Specific elastic modulus (MN·m/kg) | (23) | (23) | (23) | (23) | (23) |
| Temperature $T_2$ (°C) | (1672) | (1672) | (1672) | (1672) | (1672) |
| Temperature $T_4$ (°C) | (1236) | (1236) | (1236) | (1236) | (1236) |
| Relative dielectric constant at 10 GHz | 4.2 | 4.2 | 4.2 | 4.2 | 4.2 |
| Relative dielectric constant at 35 GHz | (4.1) | (4.1) | (4.1) | (4.1) | (4.1) |
| Dielectric loss tangent (tan $\delta_A$) at 10 GHz | 0.0014 | 0.0016 | 0.0017 | 0.0019 | 0.0019 |

(continued)

| mol% | Example 37 | Example 38 | Example 39 | Example 40 | Example 41 |
|---|---|---|---|---|---|
| Dielectric loss tangent at 35 GHz | (0.0022) | (0.0024) | (0.0026) | (0.0027) | (0.0028) |
| $\tan \delta_{100}$ - $\tan \delta_{10}$ | (0.0002) | (0.0002) | (0.0002) | (0.0002) | (0.0002) |
| Equivalent cooling rate (°C/min) based on tan $\delta$ | 10 | 40 | 200 | 500 | 800 |
| $\tan \delta_{100}$ - $\tan \delta_A$ | (0.0002) | (0.0001) | (-0.0001) | (-0.0002) | (-0.0002) |
| Surface devitrification temperature (°C) | < 1200 | < 1200 | < 1200 | < 1200 | < 1200 |
| Acid resistance (mg/cm$^2$) | 0.04 | 0.04 | 0.04 | 0.04 | 0.04 |
| Transmittance (%) after heat treatment | (62) | (62) | (62) | (62) | (62) |
| $\beta$-OP (mm$^{-1}$) | 0.51 | 0.51 | 0.51 | 0.51 | 0.51 |
| $\Delta\beta$-OH (mm$^{-1}$) | (0.07) | (0.07) | (0.07) | (0.08) | (0.08) |

Table 9

| mol% | Example 42 | Example 43 | Example 44 | Example 45 | Example 46 |
|---|---|---|---|---|---|
| SiO$_2$ | 61.9 | 61.9 | 61.9 | 61.9 | 61.9 |
| Al$_2$O$_3$ | 4.8 | 4.8 | 4.8 | 4.8 | 4.8 |
| B$_2$O$_3$ | 27.1 | 27.1 | 27.1 | 27.1 | 27.1 |
| MgO | 1.2 | 1.2 | 1.2 | 1.2 | 1.2 |
| CaO | 1.9 | 1.9 | 1.9 | 1.9 | 1.9 |
| SrO | 2.7 | 2.7 | 2.7 | 2.7 | 2.7 |
| BaO | 0.2 | 0.2 | 0.2 | 0.2 | 0.2 |
| Li$_2$O | 0.07 | 0.07 | 0.07 | 0.07 | 0.07 |
| Na$_2$O | 0.05 | 0.05 | 0.05 | 0.05 | 0.05 |
| K$_2$O | 0 | 0 | 0 | 0 | 0 |
| Expression (A) | 6.0 | 6.0 | 6.0 | 6.0 | 6.0 |
| Expression (B) | -1.1 | -1.1 | -1.1 | -1.1 | -1.1 |
| Expression (C) | 89.0 | 89.0 | 89.0 | 89.0 | 89.0 |
| Expression (D) | 0.18 | 0.18 | 0.18 | 0.18 | 0.18 |
| Expression (E) | 0.19 | 0.19 | 0.19 | 0.19 | 0.19 |
| Expression (F) | 1.24 | 1.24 | 1.24 | 1.24 | 1.24 |
| Expression (G) | 0.17 | 0.17 | 0.17 | 0.17 | 0.17 |
| Expression (H) | 35 | 35 | 35 | 35 | 35 |
| Expression (I) | 0.93 | 0.93 | 0.93 | 0.93 | 0.93 |
| Expression (J) | 0.52 | 0.52 | 0.52 | 0.52 | 0.52 |
| Expression (K) | 0.70 | 0.70 | 0.70 | 0.70 | 0.70 |
| Expression (L) | 16.2 | 16.2 | 16.2 | 16.2 | 16.2 |
| Expression (M) | 2.09 | 2.09 | 2.09 | 2.09 | 2.09 |
| Expression (N) | 0.34 | 0.34 | 0.34 | 0.34 | 0.34 |
| Expression (O) | 0.77 | 0.77 | 0.77 | 0.77 | 0.77 |
| Expression (P) | 0.72 | 0.72 | 0.72 | 0.72 | 0.72 |

(continued)

| mol% | Example 42 | Example 43 | Example 44 | Example 45 | Example 46 |
|---|---|---|---|---|---|
| Expression (Q) | 0.13 | 0.13 | 0.13 | 0.13 | 0.13 |
| Expression (R) | 0.54 | 0.54 | 0.54 | 0.54 | 0.54 |
| $B^{[3]}/(B^{[3]}+B^{[4]})$ | (0.95) | (0.95) | (0.95) | (0.95) | (0.95) |
| $B^{[3]}$ (calculated as $B_2O_3$) | (25.7) | (25.7) | (25.8) | (25.8) | (25.8) |
| Average thermal expansion coefficient ($\times 10^{-7}$/K) | (34.6) | (34.6) | (34.6) | (34.6) | (34.6) |
| Density (g/cm$^3$) | (2.24) | (2.24) | (2.24) | (2.24) | (2.24) |
| $T_g$ (°C) | (577) | (577) | (577) | (577) | (577) |
| Young's modulus (GPa) | (52) | (52) | (52) | (52) | (52) |
| Specific elastic modulus (MN·m/kg) | (23) | (23) | (23) | (23) | (23) |
| Temperature $T_2$ (°C) | (1669) | (1669) | (1669) | (1669) | (1669) |
| Temperature $T_4$ (°C) | (1229) | (1229) | (1229) | (1229) | (1229) |
| Relative dielectric constant at 10 GHz | (4.3) | (4.3) | (4.3) | (4.3) | (4.3) |
| Relative dielectric constant at 35 GHz | (4.3) | (4.3) | (4.3) | (4.3) | (4.3) |
| Dielectric loss tangent ($\tan \delta_A$) at 10 GHz | 0.0014 | 0.0014 | 0.0014 | 0.0014 | 0.0014 |
| Dielectric loss tangent at 35 GHz | (0.0026) | (0.0029) | (0.0031) | (0.0033) | (0.0034) |
| $\tan \delta_{100}$ - $\tan \delta_{10}$ | (0.0003) | (0.0003) | (0.0003) | (0.0003) | (0.0003) |
| Equivalent cooling rate (°C/min) based on $\tan \delta$ | 10 | 40 | 200 | 500 | 800 |
| $\tan \delta_{100}$ - $\tan \delta_A$ | (0.0003) | (0.0001) | (-0.0001) | (-0.0002) | (-0.0002) |
| Surface devitrification temperature (°C) | (< 1200) | (< 1200) | (< 1200) | (< 1200) | (< 1200) |
| Acid resistance (mg/cm$^2$) | (0.09) | (0.09) | (0.09) | (0.09) | (0.09) |
| Transmittance (%) after heat treatment | (61) | (61) | (61) | (61) | (61) |
| β-OP (mm$^{-1}$) | 0.74 | 0.74 | 0.74 | 0.74 | 0.74 |
| Δβ-OH (mm$^{-1}$) | (0.03) | (0.03) | (0.03) | (0.04) | (0.04) |

Table 10

| mol% | Example 47 | Example 48 | Example 49 | Example 50 | Example 51 |
|---|---|---|---|---|---|
| $SiO_2$ | 66.1 | 66.1 | 66.1 | 66.1 | 66.1 |
| $Al_2O_3$ | 11.3 | 11.3 | 11.3 | 11.3 | 11.3 |
| $B_2O_3$ | 7.8 | 7.8 | 7.8 | 7.8 | 7.8 |
| MgO | 5.1 | 5.1 | 5.1 | 5.1 | 5.1 |
| CaO | 4.5 | 4.5 | 4.5 | 4.5 | 4.5 |
| SrO | 5.2 | 5.2 | 5.2 | 5.2 | 5.2 |
| BaO | 0 | 0 | 0 | 0 | 0 |
| $Li_2O$ | 0 | 0 | 0 | 0 | 0 |
| $Na_2O$ | 0.02 | 0.02 | 0.02 | 0.02 | 0.02 |
| $K_2O$ | 0 | 0 | 0 | 0 | 0 |
| Expression (A) | 14.8 | 14.8 | 14.8 | 14.8 | 14.8 |
| Expression (B) | -3.6 | -3.6 | -3.6 | -3.6 | -3.6 |

(continued)

| mol% | Example 47 | Example 48 | Example 49 | Example 50 | Example 51 |
|---|---|---|---|---|---|
| Expression (C) | 73.9 | 73.9 | 73.9 | 73.9 | 73.9 |
| Expression (D) | 1.45 | 1.45 | 1.45 | 1.45 | 1.45 |
| Expression (E) | 0.35 | 0.35 | 0.35 | 0.35 | 0.35 |
| Expression (F) | 1.32 | 1.32 | 1.32 | 1.32 | 1.32 |
| Expression (G) | 0.00 | 0.00 | 0.00 | 0.00 | 0.00 |
| Expression (H) | 58 | 58 | 58 | 58 | 58 |
| Expression (I) | 0.54 | 0.54 | 0.54 | 0.54 | 0.54 |
| Expression (J) | 0.65 | 0.65 | 0.65 | 0.65 | 0.65 |
| Expression (K) | 0.89 | 0.89 | 0.89 | 0.89 | 0.89 |
| Expression (L) | 27.9 | 27.9 | 27.9 | 27.9 | 27.9 |
| Expression (M) | 5.50 | 5.50 | 5.50 | 5.50 | 5.50 |
| Expression (N) | 0.37 | 0.37 | 0.37 | 0.37 | 0.37 |
| Expression (O) | 0.65 | 0.65 | 0.65 | 0.65 | 0.65 |
| Expression (P) | 0.87 | 0.87 | 0.87 | 0.87 | 0.87 |
| Expression (Q) | 0.02 | 0.02 | 0.02 | 0.02 | 0.02 |
| Expression (R) | 0.00 | 0.00 | 0.00 | 0.00 | 0.00 |
| $B^{[3]}/(B^{[3]}+B^{[4]})$ | (0.93) | (0.93) | (0.94) | (0.94) | (0.94) |
| $B^{[3]}$ (calculated as $B_2O_3$) | (7.2) | (7.3) | (7.3) | (7.3) | (7.3) |
| Average thermal expansion coefficient ($\times 10^{-7}$/K) | 38.4 | 38.4 | 38.4 | 38.4 | 38.4 |
| Density (g/cm$^3$) | 2.50 | 2.50 | 2.50 | 2.50 | 2.50 |
| $T_g$ (°C) | 710 | 710 | 710 | 710 | 710 |
| Young's modulus (GPa) | 76 | 76 | 76 | 76 | 76 |
| Specific elastic modulus (MN·m/kg) | 30 | 30 | 30 | 30 | 30 |
| Temperature $T_2$ (°C) | 1645 | 1645 | 1645 | 1645 | 1645 |
| Temperature $T_4$ (°C) | 1275 | 1275 | 1275 | 1275 | 1275 |
| Relative dielectric constant at 10 GHz | 5.4 | 5.4 | 5.4 | 5.4 | 5.4 |
| Relative dielectric constant at 35 GHz | 5.3 | 5.3 | 5.3 | 5.3 | 5.3 |
| Dielectric loss tangent (tan $\delta_A$) at 10 GHz | 0.0059 | 0.0063 | 0.0068 | 0.0071 | 0.0072 |
| Dielectric loss tangent at 35 GHz | (0.0080) | (0.0086) | (0.0093) | (0.0097) | (0.0100) |
| tan $\delta_{100}$ - tan $\delta_{10}$ | (0.0007) | (0.0007) | (0.0007) | (0.0007) | (0.0007) |
| Equivalent cooling rate (°C/min) based on tan $\delta$ | 10 | 40 | 200 | 500 | 800 |
| tan $\delta_{100}$ - tan $\delta_A$ | (0.0007) | (0.0003) | (-0.0002) | (-0.0005) | (-0.0006) |
| Surface devitrification temperature (°C) | 1266 | 1266 | 1266 | 1266 | 1266 |
| Acid resistance (mg/cm$^2$) | 0.000 | 0.000 | 0.000 | 0.000 | 0.000 |
| Transmittance (%) after heat treatment | (> 50) | (> 50) | (> 50) | (> 50) | (> 50) |
| $\beta$-OP (mm$^{-1}$) | 0.30 | 0.30 | 0.30 | 0.30 | 0.30 |
| $\Delta\beta$-OH (mm$^{-1}$) | (0.00) | (0.00) | (0.00) | (0.00) | (0.00) |

Table 11

| mol% | Example 52 | Example 53 | Example 54 | Example 55 | Example 56 |
|---|---|---|---|---|---|
| $SiO_2$ | 62.1 | 62.6 | 63.0 | 62.0 | 62.1 |
| $Al_2O_3$ | 5.3 | 5.3 | 5.3 | 5.3 | 5.3 |
| $B_2O_3$ | 27.6 | 27.1 | 26.5 | 27.5 | 27.5 |
| MgO | 2.7 | 2.2 | 1.7 | 3.0 | 3.2 |
| CaO | 0.5 | 0.5 | 0.5 | 0.7 | 0.5 |
| SrO | 1.0 | 1.5 | 2.0 | 0.7 | 0.7 |
| BaO | 0.7 | 0.7 | 0.7 | 0.5 | 0.5 |
| $Li_2O$ | 0.09 | 0.08 | 0.18 | 0.17 | 0.17 |
| $Na_2O$ | 0.06 | 0.08 | 0.07 | 0.08 | 0.03 |
| $K_2O$ | 0.00 | 0.01 | 0.00 | 0.01 | 0.01 |
| Expression (A) | 4.9 | 4.9 | 4.9 | 4.9 | 4.9 |
| Expression (B) | 0.4 | 0.4 | 0.4 | 0.4 | 0.4 |
| Expression (C) | 89.7 | 89.7 | 89.6 | 89.6 | 89.6 |
| Expression (D) | 0.19 | 0.20 | 0.20 | 0.19 | 0.19 |
| Expression (E) | 0.55 | 0.45 | 0.35 | 0.61 | 0.65 |
| Expression (F) | 0.92 | 0.92 | 0.92 | 0.92 | 0.92 |
| Expression (G) | 0.26 | 0.32 | 0.41 | 0.17 | 0.16 |
| Expression (H) | 35 | 36 | 37 | 35 | 35 |
| Expression (I) | 0.53 | 0.81 | 1.23 | 0.32 | 0.32 |
| Expression (J) | 0.65 | 0.55 | 0.45 | 0.76 | 0.76 |
| Expression (K) | 0.69 | 0.70 | 0.70 | 0.69 | 0.69 |
| Expression (L) | 15.4 | 15.5 | 15.7 | 15.5 | 15.5 |
| Expression (M) | 1.93 | 1.84 | 1.78 | 2.02 | 2.03 |
| Expression (N) | 0.38 | 0.36 | 0.35 | 0.39 | 0.40 |
| Expression (O) | 0.31 | 0.41 | 0.51 | 0.29 | 0.24 |
| Expression (P) | 0.50 | 0.33 | 0.25 | 1.00 | 0.71 |
| Expression (Q) | 0.15 | 0.17 | 0.25 | 0.25 | 0.21 |
| Expression (R) | 0.56 | 0.50 | 0.72 | 0.67 | 0.82 |
| $B^{[3]}/(B^{[3]}+B^{[4]})$ | (0.95) | (0.95) | (0.94) | (0.95) | (0.95) |
| $B^{[3]}$ (calculated as $B_2O_3$) | (26.1) | (25.6) | (25.0) | (26.1) | (26.1) |
| Average thermal expansion coefficient ($\times 10^{-7}$/K) | 34.4 | 34.2 | 34.5 | (31.5) | (31.3) |
| Density (g/cm$^3$) | (2.21) | (2.22) | (2.23) | (2.20) | (2.20) |
| $T_g$ (°C) | 578 | 580 | 579 | (581) | (582) |
| Young's modulus (GPa) | (52) | (52) | (52) | (52) | (52) |
| Specific elastic modulus (MN·m/kg) | (23) | (23) | (23) | (24) | (24) |
| Temperature $T_2$ (°C) | (1675) | (1685) | (1696) | (1673) | (1673) |
| Temperature $T_4$ (°C) | (1243) | (1250) | (1257) | (1243) | (1244) |
| Relative dielectric constant at 10 GHz | 4.2 | 4.2 | 4.2 | (4.0) | (4.0) |
| Relative dielectric constant at 35 GHz | (4.1) | (4.1) | (4.2) | (4.1) | (4.1) |

(continued)

| mol% | Example 52 | Example 53 | Example 54 | Example 55 | Example 56 |
|---|---|---|---|---|---|
| Dielectric loss tangent at 10 GHz | 0.0012 | 0.0012 | 0.0012 | (0.0012) | (0.0012) |
| Dielectric loss tangent at 35 GHz | (0.0018) | (0.0019) | (0.0020) | (0.0018) | (0.0018) |
| $\tan \delta_{100}$ - $\tan \delta_{10}$ | (0.0002) | (0.0002) | (0.0002) | (0.0002) | (0.0002) |
| Surface devitrification temperature (°C) | (< 1200) | (< 1200) | (< 1200) | (< 1200) | (< 1200) |
| Acid resistance (mg/cm$^2$) | 0.02 | 0.03 | 0.04 | 0.02 | 0.02 |
| Transmittance (%) after heat treatment | 67 | 76 | 75 | 64 | 58 |
| $\beta$-OP (mm$^{-1}$) | 0.5 | 0.7 | 0.8 | 0.5 | 0.7 |
| $\Delta\beta$-OH (mm$^{-1}$) | 0.04 | 0.05 | 0.07 | 0.05 | 0.03 |

Table 12

| mol% | Example 57 | Example 58 | Example 59 | Example 60 | Example 61 |
|---|---|---|---|---|---|
| $SiO_2$ | 62.1 | 62.1 | 59.2 | 67.5 | 65.0 |
| $Al_2O_3$ | 5.3 | 5.3 | 6.4 | 6.8 | 6.1 |
| $B_2O_3$ | 27.6 | 27.6 | 28.0 | 20.3 | 23.7 |
| MgO | 2.9 | 3.2 | 3.9 | 2.8 | 3.0 |
| CaO | 0.8 | 0.7 | 0.9 | 1.4 | 1.1 |
| SrO | 1.0 | 0.5 | 0.8 | 0.8 | 0.6 |
| BaO | 0.2 | 0.5 | 0.6 | 0.3 | 0.4 |
| $Li_2O$ | 0.09 | 0.07 | 0.20 | 0.17 | 0.06 |
| $Na_2O$ | 0.04 | 0.07 | 0.03 | 0.04 | 0.07 |
| $K_2O$ | 0.00 | 0.00 | 0.00 | 0.00 | 0.00 |
| Expression (A) | 4.9 | 4.9 | 6.2 | 5.3 | 5.1 |
| Expression (B) | 0.4 | 0.4 | 0.2 | 1.5 | 1.0 |
| Expression (C) | 89.7 | 89.7 | 87.2 | 87.7 | 88.7 |
| Expression (D) | 0.19 | 0.19 | 0.23 | 0.33 | 0.26 |
| Expression (E) | 0.59 | 0.65 | 0.63 | 0.53 | 0.59 |
| Expression (F) | 0.92 | 0.92 | 0.97 | 0.78 | 0.84 |
| Expression (G) | 0.07 | 0.16 | 0.15 | 0.11 | 0.13 |
| Expression (H) | 35 | 35 | 31 | 47 | 41 |
| Expression (I) | 0.32 | 0.26 | 0.29 | 0.26 | 0.24 |
| Expression (J) | 0.76 | 0.80 | 0.77 | 0.79 | 0.80 |
| Expression (K) | 0.69 | 0.69 | 0.68 | 0.77 | 0.73 |
| Expression (L) | 15.4 | 15.4 | 16.8 | 17.4 | 16.5 |
| Expression (M) | 1.99 | 2.03 | 2.56 | 2.15 | 2.08 |
| Expression (N) | 0.40 | 0.40 | 0.40 | 0.39 | 0.40 |
| Expression (O) | 0.37 | 0.24 | 0.27 | 0.42 | 0.33 |
| Expression (P) | 0.80 | 1.40 | 1.13 | 1.75 | 1.83 |
| Expression (Q) | 0.13 | 0.14 | 0.23 | 0.22 | 0.14 |

(continued)

| mol% | Example 57 | Example 58 | Example 59 | Example 60 | Example 61 |
|---|---|---|---|---|---|
| Expression (R) | 0.67 | 0.49 | 0.85 | 0.79 | 0.45 |
| $B^{[3]}/(B^{[3]}+B^{[4]})$ | (0.95) | (0.95) | (0.95) | (0.95) | (0.95) |
| $B^{[3]}$ (calculated as $B_2O_3$) | (26.1) | (26.1) | (26.6) | (19.2) | (22.4) |
| Average thermal expansion coefficient ($\times 10^{-7}$/K) | (31.5) | (31.3) | (32.9) | (29.1) | (30.1) |
| Density (g/cm$^3$) | (2.19) | (2.19) | (2.22) | (2.24) | (2.22) |
| $T_g$ (°C) | (582) | (582) | (581) | (639) | (612) |
| Young's modulus (GPa) | (52) | (52) | (54) | (58) | (55) |
| Specific elastic modulus (MN·m/kg) | (24) | (24) | (24) | (26) | (25) |
| Temperature $T_2$ (°C) | (1673) | (1673) | (1604) | (1765) | (1722) |
| Temperature $T_4$ (°C) | (1243) | (1244) | (1198) | (1328) | (1289) |
| Relative dielectric constant at 10 GHz | (4.0) | (4.0) | (4.2) | (4.2) | (4.1) |
| Relative dielectric constant at 35 GHz | (4.1) | (4.1) | (4.2) | (4.3) | (4.2) |
| Dielectric loss tangent at 10 GHz | (0.0012) | (0.0012) | (0.0016) | (0.0018) | (0.0015) |
| Dielectric loss tangent at 35 GHz | (0.0018) | (0.0018) | (0.0023) | (0.0025) | (0.0022) |
| $\tan \delta_{100}$ - $\tan \delta_{10}$ | (0.0002) | (0.0002) | (0.0003) | (0.0003) | (0.0003) |
| Surface devitrification temperature (°C) | (< 1200) | (< 1200) | (< 1200) | (< 1200) | (< 1200) |
| Acid resistance (mg/cm$^2$) | 0.02 | 0.02 | (< 0.05) | (< 0.05) | (< 0.05) |
| Transmittance (%) after heat treatment | 57 | 50 | (> 50) | (> 50) | (> 50) |
| β-OP (mm$^{-1}$) | 0.6 | 0.7 | 0.8 | 0.4 | 0.6 |
| Δβ-OH (mm$^{-1}$) | 0.03 | 0.04 | (< 0.1) | (< 0.1) | (< 0.1) |

Table 13

| mol% | Example 62 | Example 63 | Example 64 | Example 65 | Example 66 | Example 67 | Example 68 |
|---|---|---|---|---|---|---|---|
| $SiO_2$ | 64.6 | 61.9 | 63.0 | 62.9 | 61.9 | 64.0 | 62.9 |
| $Al_2O_3$ | 4.0 | 6.4 | 6.0 | 6.0 | 7.4 | 5.3 | 5.4 |
| $B_2O_3$ | 27.4 | 25.2 | 24.8 | 25.0 | 25.3 | 25.5 | 27.0 |
| MgO | 2.3 | 3.2 | 3.0 | 4.9 | 2.9 | 3.2 | 2.3 |
| CaO | 0.6 | 2.3 | 0.7 | 0.6 | 0.9 | 0.7 | 0.2 |
| SrO | 0.7 | 0.6 | 2.1 | 0.5 | 0.7 | 0.5 | 2.0 |
| BaO | 0.3 | 0.2 | 0.2 | 0.0 | 0.8 | 0.5 | 0.0 |
| $Li_2O$ | 0.13 | 0.16 | 0.18 | 0.12 | 0.15 | 0.17 | 0.14 |
| $Na_2O$ | 0.04 | 0.07 | 0.05 | 0.07 | 0.05 | 0.07 | 0.07 |
| $K_2O$ | 0.00 | 0.01 | 0.00 | 0.00 | 0.01 | 0.00 | 0.01 |
| Expression (A) | 3.9 | 6.3 | 6.0 | 6.0 | 5.3 | 4.9 | 4.5 |
| Expression (B) | 0.1 | 0.1 | 0.0 | 0.0 | 2.1 | 0.4 | 0.9 |
| Expression (C) | 91.9 | 87.1 | 87.8 | 87.8 | 87.1 | 89.6 | 89.9 |
| Expression (D) | 0.15 | 0.25 | 0.24 | 0.24 | 0.29 | 0.21 | 0.20 |
| Expression (E) | 0.59 | 0.51 | 0.50 | 0.82 | 0.55 | 0.65 | 0.51 |

(continued)

| mol% | Example 62 | Example 63 | Example 64 | Example 65 | Example 66 | Example 67 | Example 68 |
|---|---|---|---|---|---|---|---|
| Expression (F) | 0.98 | 0.98 | 1.00 | 1.00 | 0.72 | 0.92 | 0.83 |
| Expression (G) | 0.13 | 0.06 | 0.07 | 0.00 | 0.28 | 0.16 | 0.00 |
| Expression (H) | 37 | 37 | 38 | 38 | 37 | 39 | 36 |
| Expression (I) | 0.34 | 0.15 | 0.62 | 0.09 | 0.39 | 0.26 | 0.80 |
| Expression (J) | 0.74 | 0.87 | 0.62 | 0.92 | 0.72 | 0.80 | 0.56 |
| Expression (K) | 0.70 | 0.71 | 0.72 | 0.72 | 0.71 | 0.71 | 0.70 |
| Expression (L) | 14.2 | 17.3 | 17.0 | 16.8 | 17.0 | 15.7 | 15.3 |
| Expression (M) | 1.59 | 2.58 | 2.34 | 2.65 | 2.11 | 2.05 | 1.76 |
| Expression (N) | 0.39 | 0.39 | 0.38 | 0.43 | 0.38 | 0.40 | 0.37 |
| Expression (O) | 0.33 | 0.46 | 0.47 | 0.18 | 0.30 | 0.24 | 0.49 |
| Expression (P) | 0.86 | 3.83 | 0.33 | 1.20 | 1.29 | 1.40 | 0.10 |
| Expression (Q) | 0.17 | 0.24 | 0.23 | 0.19 | 0.20 | 0.24 | 0.22 |
| Expression (R) | 0.77 | 0.69 | 0.78 | 0.64 | 0.74 | 0.71 | 0.64 |
| $B^{[3]}/(B^{[3]}+B^{[4]})$ | (0.95) | (0.95) | (0.95) | (0.95) | (0.95) | (0.95) | (0.95) |
| $B^{[3]}$ (calculated as $B_2O_3$) | (25.9) | (23.9) | (23.5) | (23.7) | (23.9) | (24.2) | (25.6) |
| Average thermal expansion coefficient ($\times 10^{-7}$/K) | (30.4) | (32.3) | (32.0) | (30.3) | (31.1) | (30.5) | (31.1) |
| Density (g/cm$^3$) | (2.17) | (2.22) | (2.24) | (2.20) | (2.24) | (2.20) | (2.20) |
| $T_g$ (°C) | (578) | (601) | (601) | (604) | (606) | (596) | (586) |
| Young's modulus (GPa) | (50) | (56) | (55) | (56) | (55) | (53) | (52) |
| Specific elastic modulus (MN·m/kg) | (23) | (25) | (25) | (25) | (25) | (24) | (24) |
| Temperature $T_2$ (°C) | (1734) | (1655) | (1680) | (1673) | (1657) | (1711) | (1691) |
| Temperature $T_4$ (°C) | (1280) | (1237) | (1252) | (1253) | (1248) | (1274) | (1255) |
| Relative dielectric constant at 10 GHz | (3.9) | (4.2) | (4.2) | (4.1) | (4.2) | (4.1) | (4.2) |
| Relative dielectric constant at 35 GHz | (3.9) | (4.2) | (4.2) | (4.1) | (4.3) | (4.1) | (4.3) |
| Dielectric loss tangent at 10 GHz | (0.0009) | (0.0017) | (0.0017) | (0.0016) | (0.0016) | (0.0013) | (0.0014) |
| Dielectric loss tangent at 35 GHz | (0.0013) | (0.0024) | (0.0024) | (0.0023) | (0.0023) | (0.0019) | (0.0020) |
| $\tan \delta_{100}$ - $\tan \delta_{10}$ | (0.0002) | (0.0003) | (0.0003) | (0.0003) | (0.0003) | (0.0003) | (0.0003) |
| Surface devitrification temperature (°C) | (< 1200) | (< 1200) | (< 1200) | (< 1200) | < 1200 | (< 1200) | (< 1200) |
| Acid resistance (mg/cm$^2$) | (< 0.05) | (< 0.05) | (< 0.05) | (< 0.05) | (< 0.05) | 0.012 | (0.025) |
| Transmittance (%) after heat treatment | (> 50) | (> 50) | (> 50) | (> 50) | (> 50) | 67 | (> 50) |
| β-OP (mm$^{-1}$) | 0.6 | 0.4 | 0.6 | 0.6 | 0.5 | 0.8 | 0.4 |

(continued)

| mol% | Example 62 | Example 63 | Example 64 | Example 65 | Example 66 | Example 67 | Example 68 |
|---|---|---|---|---|---|---|---|
| $\Delta\beta$-OH (mm$^{-1}$) | (< 0.1) | (< 0.1) | (< 0.1) | (< 0.1) | (< 0.1) | 0.03 | (< 0.05) |

Table 14

| mol% | Example 69 | Example 70 | Example 71 | Example 72 | Example 73 |
|---|---|---|---|---|---|
| $SiO_2$ | 64.1 | 64.2 | 64.0 | 62.7 | 62.6 |
| $Al_2O_3$ | 5.3 | 5.3 | 5.3 | 5.4 | 5.4 |
| $B_2O_3$ | 25.6 | 25.2 | 25.1 | 27.0 | 26.9 |
| MgO | 3.2 | 3.2 | 3.2 | 2.3 | 2.3 |
| CaO | 0.7 | 0.7 | 0.7 | 0.2 | 0.2 |
| SrO | 0.5 | 0.5 | 0.5 | 2.0 | 2.0 |
| BaO | 0.5 | 0.5 | 0.5 | 0.0 | 0.0 |
| $Li_2O$ | 0.07 | 0.09 | 0.07 | 0.09 | 0.11 |
| $Na_2O$ | 0.05 | 0.05 | 0.05 | 0.05 | 0.05 |
| $K_2O$ | 0.00 | 0.01 | 0.01 | 0.00 | 0.01 |
| $ZrO_2$ | 0.15 | 0.30 | 0.60 | 0.30 | 0.30 |
| $Y_2O_3$ | 0 | 0 | 0 | 0 | 0.15 |
| Expression (A) | 4.9 | 4.9 | 4.9 | 4.5 | 4.5 |
| Expression (B) | 0.4 | 0.4 | 0.4 | 0.9 | 0.9 |
| Expression (C) | 89.7 | 89.4 | 89.1 | 89.7 | 89.5 |
| Expression (D) | 0.21 | 0.21 | 0.21 | 0.20 | 0.20 |
| Expression (E) | 0.65 | 0.65 | 0.65 | 0.51 | 0.51 |
| Expression (F) | 0.92 | 0.92 | 0.92 | 0.83 | 0.83 |
| Expression (G) | 0.16 | 0.16 | 0.16 | 0.00 | 0.00 |
| Expression (H) | 39 | 39 | 39 | 36 | 36 |
| Expression (I) | 0.26 | 0.26 | 0.26 | 0.80 | 0.80 |
| Expression (J) | 0.80 | 0.80 | 0.80 | 0.56 | 0.56 |
| Expression (K) | 0.71 | 0.72 | 0.72 | 0.70 | 0.70 |
| Expression (L) | 15.6 | 15.9 | 16.0 | 15.4 | 15.6 |
| Expression (M) | 2.03 | 2.03 | 2.01 | 1.73 | 1.74 |
| Expression (N) | 0.40 | 0.40 | 0.40 | 0.38 | 0.37 |
| Expression (O) | 0.24 | 0.24 | 0.24 | 0.49 | 0.49 |
| Expression (P) | 1.40 | 1.40 | 1.40 | 0.10 | 0.10 |
| Expression (Q) | 0.13 | 0.16 | 0.13 | 0.14 | 0.17 |
| Expression (R) | 0.56 | 0.61 | 0.53 | 0.62 | 0.64 |
| $B^{[3]}/(B^{[3]}+B^{[4]})$ | (0.95) | (0.95) | (0.95) | (0.95) | (0.95) |
| $B^{[3]}$ (calculated as $B_2O_3$) | (24.2) | (23.9) | (23.8) | (25.5) | (25.5) |
| Relative dielectric constant at 10 GHz | (4.2) | 4.2 | 4.2 | 4.2 | 4.2 |
| Dielectric loss tangent at 10 GHz | (0.0014) | 0.0014 | 0.0014 | 0.0014 | 0.0014 |
| Acid resistance (mg/cm$^2$) | (0.011) | 0.010 | 0.008 | 0.017 | 0.015 |

(continued)

| mol% | Example 69 | Example 70 | Example 71 | Example 72 | Example 73 |
|---|---|---|---|---|---|
| Transmittance (%) after heat treatment | (> 50) | 78 | 26 | 76 | 53 |
| β-OP (mm$^{-1}$) | 0.8 | 0.6 | 0.8 | 0.6 | 0.7 |
| Δβ-OH (mm$^{-1}$) | (< 0.05) | 0.04 | 0.02 | 0.04 | 0.04 |

Table 15

| mol% | Example 74 | Example 75 | Example 76 | Example 77 | Example 78 |
|---|---|---|---|---|---|
| SiO$_2$ | 62.5 | 62.8 | 62.6 | 61.8 | 61.7 |
| Al$_2$O$_3$ | 5.4 | 5.4 | 5.4 | 4.9 | 4.9 |
| B$_2$O$_3$ | 26.9 | 27.0 | 26.9 | 27.9 | 27.9 |
| MgO | 2.3 | 2.3 | 2.3 | 2.1 | 2.1 |
| CaO | 0.2 | 0.2 | 0.2 | 1.0 | 1.0 |
| SrO | 2.0 | 2.0 | 2.0 | 1.8 | 1.8 |
| BaO | 0.0 | 0.0 | 0.0 | 0.2 | 0.2 |
| Li$_2$O | 0.11 | 0.10 | 0.18 | 0.12 | 0.12 |
| Na$_2$O | 0.05 | 0.05 | 0.08 | 0.06 | 0.03 |
| K$_2$O | 0.01 | 0.00 | 0.01 | 0.00 | 0.00 |
| ZrO$_2$ | 0.30 | 0 | 0 | 0.15 | 0.30 |
| Y$_2$O$_3$ | 0.30 | 0.15 | 0.30 | 0 | 0 |
| Expression (A) | 4.5 | 4.5 | 4.5 | 5.1 | 5.1 |
| Expression (B) | 0.9 | 0.9 | 0.9 | -0.2 | -0.2 |
| Expression (C) | 89.4 | 89.8 | 89.6 | 89.7 | 89.6 |
| Expression (D) | 0.20 | 0.20 | 0.20 | 0.17 | 0.17 |
| Expression (E) | 0.51 | 0.51 | 0.51 | 0.42 | 0.42 |
| Expression (F) | 0.83 | 0.83 | 0.83 | 1.04 | 1.04 |
| Expression (G) | 0.00 | 0.00 | 0.00 | 0.09 | 0.09 |
| Expression (H) | 36 | 36 | 36 | 34 | 34 |
| Expression (I) | 0.80 | 0.80 | 0.80 | 0.63 | 0.63 |
| Expression (J) | 0.56 | 0.56 | 0.56 | 0.62 | 0.62 |
| Expression (K) | 0.70 | 0.70 | 0.70 | 0.69 | 0.69 |
| Expression (L) | 15.7 | 15.4 | 15.7 | 15.6 | 15.7 |
| Expression (M) | 1.74 | 1.74 | 1.76 | 1.94 | 1.94 |
| Expression (N) | 0.37 | 0.38 | 0.37 | 0.37 | 0.37 |
| Expression (O) | 0.49 | 0.49 | 0.49 | 0.54 | 0.54 |
| Expression (P) | 0.10 | 0.10 | 0.10 | 0.56 | 0.56 |
| Expression (Q) | 0.17 | 0.15 | 0.27 | 0.18 | 0.16 |
| Expression (R) | 0.68 | 0.66 | 0.68 | 0.68 | 0.76 |
| B[3]/(B[3]+B[4]) | (0.95) | (0.95) | (0.95) | (0.95) | (0.95) |
| B[3] (calculated as B$_2$O$_3$) | (25.4) | (25.6) | (25.5) | (26.4) | (26.4) |
| Relative dielectric constant at 10 GHz | 4.2 | (4.2) | 4.2 | (4.2) | (4.2) |

(continued)

| mol% | Example 74 | Example 75 | Example 76 | Example 77 | Example 78 |
|---|---|---|---|---|---|
| Dielectric loss tangent at 10 GHz | 0.0014 | (0.0014) | 0.0014 | (0.0012) | (0.0012) |
| Acid resistance (mg/cm$^2$) | 0.012 | (0.017) | (0.015) | (0.040) | (0.035) |
| Transmittance (%) after heat treatment | 3 | (> 50) | (> 50) | (> 50) | (> 50) |
| β-OP (mm$^{-1}$) | 0.5 | 0.4 | 0.5 | 0.7 | 0.4 |
| Δβ-OH (mm$^{-1}$) | 0.03 | (< 0.05) | (< 0.05) | (< 0.05) | (< 0.05) |

In Examples 1 to 6, Example 8, Example 10 to Example 16, Example 21 to Example 30, Example 52 to Example 54, and Example 64 in which the value of the expression (A) was 3.5 to 6, the value of the expression (B) was -2 to 2, and the value of the expression (J) was 0.2 to 0.7, the dielectric loss tangent at a frequency of 35 GHz was 0.005 or less, the elution amount of the glass component in the acid resistance evaluation was 0.12 mg/cm$^2$ or less, the transmittance after the heat treatment was 2% or more, and the Δβ-OH was 0 mm$^{-1}$ to 0.1 mm$^{-1}$.

In Example 5, Example 7, Example 9, Example 13, Example 14, and Example 16 to Example 18 in which the value of the expression (A) was 3.5 to 6, the value of the expression (B) was -2 to 2, the value of the expression (K) was 0.55 to 0.7, and the value of the expression (L) was 16 to 30, the dielectric loss tangent at a frequency of 35 GHz was 0.005 or less, the elution amount of the glass component in the acid resistance evaluation was 0.12 mg/cm$^2$ or less, the transmittance after the heat treatment was 2% or more, and the Δβ-OH was 0 mm$^{-1}$ or more and 0.1 mm$^{-1}$ or less.

In Example 4, Example 5, Example 19, Example 20, Example 30, Example 53, and Example 54 in which the value of the expression (A) was 2 to 6, the value of the expression (B) was -3 to 2, and B[3] (calculated as $B_2O_3$) was 0 to 26, the dielectric loss tangent at a frequency of 35 GHz was 0.005 or less, the elution amount of the glass component in the acid resistance evaluation was 0.12 mg/cm$^2$ or less, the transmittance after the heat treatment was 2% or more, and the Δβ-OH was 0 mm$^{-1}$ to 0.1 mm$^{-1}$.

In Example 9, Example 52, and Example 55 to Example 78 in which the value of the expression (A) was 3.5 to 8, the value of the expression (B) was 0 to 3, the value of the expression (C) was 87 to 95, and the value of the expression (E) was 0.5 to 1, the elution amount of the glass component in the acid resistance evaluation was 0.12 mg/cm$^2$ or less, the transmittance after the heat treatment was 2% or more, and the Δβ-OH was 0 mm$^{-1}$ or more and 0.1 mm$^{-1}$ or less.

In Example 31 and Example 32 in which the value of the expression (1) was more than 0.7 and the value of the expression (K) was less than 16, the Δβ-OH was more than 0.1 mm$^{-1}$.

In Example 33 in which the value of the expression (1) was more than 0.7 and the value of the expression (K) was less than 16, the transmittance after the heat treatment was less than 1%, which was lower than that in Inventive Examples

In Example 34 in which the content of $Al_2O_3$ was less than 2% and the value of the expression (B) was less than -3, the Δβ-OH was more than 0.1 mm$^{-1}$.

In Example 35 in which the value of the expression (A) was more than 6, the Δβ-OH was more than 0.1 mm$^{-1}$.

In Example 36 in which the content of $Al_2O_3$ was more than 6%, the content of $B_2O_3$ was less than 18%, the value of the expression (A) was more than 6%, and the value of the expression (B) was less than -3%, the dielectric loss tangent at 35 GHz was more than 0.005.

In Example 1 to Example 30 and Example 37 to Example 46 in which $-0.0003 \leq (\tan \delta_{100} - \tan \delta_{10}) \leq 0.0003$ is satisfied, the deterioration of the dielectric loss tangent can be prevented even in the case of rapid cooling in the production of the glass.

In Example 36 and Example 47 to Example 51 in which the $\tan \delta_{100} - \tan \delta_{10}$ is more than 0.0003, rapid cooling leads to the deterioration of the dielectric loss tangent in the production of the glass.

Although the present invention has been described in detail with reference to specific embodiments, it is apparent to those skilled in the art that various changes and modifications can be made without departing from the spirit and scope of the present invention. Note that, the present application is based on a Japanese patent application (Japanese Patent Application No. 2022-027168) filed on February 24, 2022, the entire contents of which are incorporated herein by reference. In addition, all references cited here are entirely incorporated.

INDUSTRIAL APPLICABILITY

The glass according to the present invention has a low surface devitrification temperature, has excellent acid resistance, moisture resistance, and phase separation property, and can reduce a dielectric loss of a high frequency signal. A glass sheet including such an alkali-free glass is useful for a general high frequency electronic device that copes with a high frequency signal at a frequency of 10 GHz or more, particularly a high frequency signal at a frequency of 30 GHz or more, and further a high frequency signal at a frequency of 35 GHz or more, for example, a glass substrate of a communication device, a frequency filter component such as a SAW device and FBAR, a band-pass filter such as a waveguide tube, a substrate integrated waveguide (SIW) component, a radar component, an antenna component (particularly, a liquid crystal antenna most suitable for satellite communication), a window glass, a vehicular window glass, a cover glass for a touch panel, a display panel, and the like.

REFERENCE SIGNS LIST

1: circuit substrate
2: glass substrate
2a, 2b: main surface
3, 4: wiring layer

**Claims**

1. An alkali-free glass, comprising, as represented by mol% based on oxides:

   50% to 76% of $SiO_2$;
   2% to 6% of $Al_2O_3$;
   18% to 35% of $B_2O_3$;
   1% to 3.5% of MgO;
   0.5% to 4% of CaO;
   1% to 4.5% of SrO; and
   0% to 3% of BaO, wherein
   an expression (A) is [MgO]+[CaO]+[SrO]+[BaO], and a value of the expression (A) is 3.5 to 6,
   an expression (B) is [$Al_2O_3$]-([MgO]+[CaO]+[SrO]+[BaO]), and a value of the expression (B) is -2 to 2,
   an expression (J) is ([MgO]+[CaO])/([MgO]+[CaO]+[SrO]+[BaO]), and a value of the expression (J) is 0.2 to 0.7, and
   $\Delta\beta$-OH is 0 $mm^{-1}$ to 0.1 $mm^{-1}$, and the $\Delta\beta$-OH is calculated by the following method:

      $\beta$-OP of a glass sheet made of an alkali-free glass and having a thickness of 1.0 mm is measured, then the glass sheet is left standing at a temperature of 60°C and a relative humidity of 95%, after 90 hours from a start of the standing, $\beta$-OP of the glass sheet is measured, and a value obtained by subtracting the $\beta$-OH before the standing from the $\beta$-OP after the standing is calculated as the $\Delta\beta$-OH.

2. An alkali-free glass, comprising, as represented by mol% based on oxides:

   50% to 67% of $SiO_2$;
   2% to 6% of $Al_2O_3$;
   18% to 35% of $B_2O_3$;
   1% to 5.5% of MgO;
   0% to 4.5% of CaO;
   0.5% to 5% of SrO; and
   0% to 3% of BaO, wherein
   an expression (A) is [MgO]+[CaO]+[SrO]+[BaO], and a value of the expression (A) is 3.5 to 6,
   an expression (B) is [$Al_2O_3$]-([MgO]+[CaO]+[SrO]+[BaO]), and a value of the expression (B) is -2 to 2,
   an expression (K) is [$SiO_2$]/([$SiO_2$]+[$B_2O_3$]), and a value of the expression (K) is 0.59 to 0.7,
   an expression (L) is 119-(106×[$SiO_2$]+60×[$Al_2O_3$]+119×[$B_2O_3$]+37×[MgO]+32×[CaO]+32×[SrO]+33×[BaO]+36×[$Li_2O$]+20×[$Na_2O$]+13×[$K_2O$]), and a value of the expression (L) is 16 to 30, and
   $\Delta\beta$-OH is 0 $mm^{-1}$ to 0.1 $mm^{-1}$, and the $\Delta\beta$-OH is calculated by the following method:

      $\beta$-OP of a glass sheet made of an alkali-free glass and having a thickness of 1.0 mm is measured, then the glass sheet is left standing at a temperature of 60°C and a relative humidity of 95%, after 90 hours from a start of the standing, $\beta$-OP of the glass sheet is measured, and a value obtained by subtracting the $\beta$-OH before the standing from the $\beta$-OP after the standing is calculated as the $\Delta\beta$-OH.

3. An alkali-free glass, comprising, as represented by mol% based on oxides:

50% to 68% of $SiO_2$;
2% to 6% of $Al_2O_3$;
26.5% to 35% of $B_2O_3$;
1% to 5% of MgO;
0% to 5% of CaO;
1% to 5% of SrO; and
0% to 3% of BaO, wherein
an expression (A) is [MgO]+[CaO]+[SrO]+[BaO], and a value of the expression (A) is 2 to 6,
an expression (B) is [Al$_2$O$_3$]-([MgO]+[CaO]+[SrO]+[BaO]), and a value of the expression (B) is -3 to 2,
an amount of three-coordinated boron contained in the glass is 0% to 26% calculated as $B_2O_3$ as represented by mol% based on oxides, and
$\Delta\beta$-OH is 0 mm$^{-1}$ to 0.1 mm$^{-1}$, and the $\Delta\beta$-OH is calculated by the following method:

$\beta$-OP of a glass sheet made of an alkali-free glass and having a thickness of 1.0 mm is measured,
then the glass sheet is left standing at a temperature of 60°C and a relative humidity of 95%, after 90 hours from a start of the standing, $\beta$-OP of the glass sheet is measured, and a value obtained by subtracting the $\beta$-OH before the standing from the $\beta$-OP after the standing is calculated as the $\Delta\beta$-OH.

4. The alkali-free glass according to any one of claims 1 to 3, having an ultraviolet transmittance of 2% or more, the ultraviolet transmittance being measured under the following conditions:
a glass sheet having a thickness of 2.0 mm is heated to a temperature $T_4$ (°C) at which a glass viscosity is $10^4$ dPa·s, annealed to room temperature at a rate of 40°C/min, mirror-finished on both surfaces to have a thickness of 1.3 mm, and a parallel light transmittance of the obtained glass sheet at a wavelength of 308 nm is measured.

5. The alkali-free glass according to any one of claims 1 to 3, having a dielectric loss tangent at a frequency of 35 GHz of 0.005 or less.

6. The alkali-free glass according to any one of claims 1 to 3, having a density of 2.58 g/cm$^3$ or less and an average thermal expansion coefficient at 50°C to 350°C of $20 \times 10^{-7}$/°C to $50 \times 10^{-7}$/°C.

7. The alkali-free glass according to any one of claims 1 to 3, having a temperature $T_2$ at which a glass viscosity is $10^2$ dPa·s of 1500°C to 1900°C, and a temperature $T_4$ at which the glass viscosity is $10^4$ dPa·s of 1400°C or lower.

8. The alkali-free glass according to any one of claims 1 to 3, having a glass transition temperature of 700°C or lower.

9. The alkali-free glass according to any one of claims 1 to 3, having a surface devitrification temperature of 1400°C or lower.

10. A glass sheet comprising:

the alkali-free glass according to any one of claims 1 to 3, wherein
the glass sheet has main surfaces and an end surface, and
at least one of the main surfaces has an arithmetic mean roughness Ra of 1.5 nm or less.

11. A glass sheet comprising:

the alkali-free glass according to any one of claims 1 to 3, wherein
the glass sheet has main surfaces and an end surface, has a length of at least one side of 1000 mm or more, and has a thickness of 0.7 mm or less.

12. A method for producing a glass sheet, the method comprising:
producing the alkali-free glass according to any one of claims 1 to 3 by a float method or a fusion method.

13. A method for producing a glass sheet comprising the alkali-free glass according to any one of claims 1 to 3, the method comprising:

heating a glass raw material to obtain a molten glass;
removing bubbles from the molten glass;
forming the molten glass into a sheet to obtain a glass ribbon; and
annealing the glass ribbon to room temperature, wherein
the annealing is performed so that the glass ribbon is annealed at an equivalent cooling rate of 800°C/min or less.

14. An alkali-free glass, comprising, as represented by mol% based on oxides:

58% to 70% of $SiO_2$;
4.5% to 8% of $Al_2O_3$;
18% to 28% of $B_2O_3$;
0.5% to 5% of MgO;
0.1% to 3% of CaO;
0.1% to 3% of SrO; and
0% to 3% of BaO, wherein
an expression (A) is [MgO]+[CaO]+[SrO]+[BaO], and a value of the expression (A) is 3.5 to 8,
an expression (B) is [$Al_2O_3$]-([MgO]+[CaO]+[SrO]+[BaO]), and a value of the expression (B) is 0 to 3,
an expression (C) is [$SiO_2$]+[$B_2O_3$], and a value of the expression (C) is 87 to 95,
an expression (E) is [MgO]/([MgO]+[CaO]+[SrO]+[BaO]), and a value of the expression (E) is 0.5 to 1, and
$\Delta\beta$-OH is 0 $mm^{-1}$ to 0.1 $mm^{-1}$, and the $\Delta\beta$-OH is calculated by the following method:

$\beta$-OP of a glass sheet made of an alkali-free glass and having a thickness of 1.0 mm is measured, then the glass sheet is left standing at a temperature of 60°C and a relative humidity of 95%, after 90 hours from a start of the standing, $\beta$-OP of the glass sheet is measured, and a value obtained by subtracting the $\beta$-OH before the standing from the $\beta$-OP after the standing is calculated as the $\Delta\beta$-OH.

## INTERNATIONAL SEARCH REPORT

| | |
|---|---|
| | International application No. |
| | **PCT/JP2023/005070** |

**A. CLASSIFICATION OF SUBJECT MATTER**

*C03C 3/091*(2006.01)i; *C03B 25/00*(2006.01)i
FI: C03C3/091; C03B25/00

According to International Patent Classification (IPC) or to both national classification and IPC

**B. FIELDS SEARCHED**

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| A | WO 2020/209271 A1 (AGC INC.) 15 October 2020 (2020-10-15)<br>claims, examples | 1-14 |
| A | WO 2020/100834 A1 (AGC INC.) 22 May 2020 (2020-05-22)<br>claims, examples | 1-14 |
| A | WO 2020/150422 A1 (CORNING INCORPORATED) 23 July 2020 (2020-07-23)<br>claims, tables 3, 6, 11-13 | 1-14 |
| A | WO 2020/184175 A1 (NIPPON ELECTRIC GLASS CO., LTD.) 17 September 2020<br>(2020-09-17)<br>claims, examples | 1-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/005070**

| Patent document cited in search report | | | Publication date (day/month/year) | Patent family member(s) | | | Publication date (day/month/year) |
|---|---|---|---|---|---|---|---|
| WO | 2020/209271 | A1 | 15 October 2020 | EP | 3954663 | A1 | |
| | | | | claims, examples | | | |
| | | | | US | 2022/0024805 | A1 | |
| | | | | CN | 113661148 | A | |
| | | | | KR | 10-2021-0151810 | A | |
| WO | 2020/100834 | A1 | 22 May 2020 | EP | 3882222 | A1 | |
| | | | | claims, examples | | | |
| | | | | US | 2021/0261456 | A1 | |
| | | | | CN | 113039163 | A | |
| | | | | KR | 10-2021-0092736 | A | |
| WO | 2020/150422 | A1 | 23 July 2020 | JP | 2022-522986 | A | |
| | | | | claims, tables 3, 6, 11-13 | | | |
| | | | | US | 2020/0231490 | A1 | |
| | | | | CN | 113508097 | A | |
| | | | | KR | 10-2021-0112355 | A | |
| WO | 2020/184175 | A1 | 17 September 2020 | US | 2022/0169555 | A1 | |
| | | | | claims, examples | | | |
| | | | | CN | 113544102 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018051793 A
- JP 2022027168 A